(19) Europäisches Patentamt
European Patent Office
Office européen des brevets

(11) **EP 4 354 768 A1**

(12) **EUROPEAN PATENT APPLICATION**
published in accordance with Art. 153(4) EPC

(43) Date of publication:
**17.04.2024 Bulletin 2024/16**

(21) Application number: **21945549.0**

(22) Date of filing: **18.06.2021**

(51) International Patent Classification (IPC):
**H04L 1/00** (2006.01)    **H04L 27/34** (2006.01)

(52) Cooperative Patent Classification (CPC):
**H04L 1/00; H04L 27/34**

(86) International application number:
**PCT/CN2021/101032**

(87) International publication number:
**WO 2022/261966 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **JIN, Lili**
  **Shenzhen, Guangdong 518129 (CN)**
• **WANG, Jian**
  **Shenzhen, Guangdong 518129 (CN)**
• **CHENG, Xingqing**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **DATA TRANSMISSION METHOD AND APPARATUS**

(57)    Embodiments of this application provide a data transmission method and apparatus, applied to the communication field, and in particular, to the field of short-range communication (for example, an in-vehicle wireless communication system). The method includes: A node determines a modulation and coding scheme based on an MCS index and an MCS set; and receives and/or sends data based on the modulation and coding scheme. A quantity N of MCS information subsets in the MCS set meets 3≤N. The MCS set may include M MCS information subsets (subsets for short below). Modulation modes in the M subsets are BPSK, QPSK, 8PSK, or the like, and coding rates corresponding to a plurality of subsets whose modulation modes are the same in the M subsets change evenly in ascending order, where M≤N. According to embodiments of this application, stability of data transmission can be enhanced, and data transmission efficiency can be improved. The method may be applied to the internet of vehicles, for example, vehicle to everything V2X, long term evolution-vehicle LTE-V, and vehicle to vehicle V2V.

FIG. 4

**Description**

**TECHNICAL FIELD**

This application relates to the field of communication technologies and the field of connected vehicles, in particular, to the field of short-range wireless communication technologies, for example, cockpit domain communication, and specifically, to a data transmission method and apparatus.

**BACKGROUND**

With continuous development of global communication technologies, a development speed and application of wireless communication technologies are in full swing. An intelligent terminal like an intelligent transportation device, a smart home device, or a robot based on a wireless communication technology is gradually entering people's daily lives. For example, the intelligent terminal is the intelligent transportation device. Development and application of internet of vehicles technologies attract more attention from people. Through in-vehicle wireless communication, a quantity of harnesses, lengths of the harnesses, and weights of the harnesses in a vehicle can be further reduced, and therefore, installation and maintenance costs of software and hardware in the vehicle can be reduced.

However, as nodes increase and functions of the nodes become more complex, interaction between the nodes also increases. This imposes a higher requirement on quality of wireless communication. In a wireless communication process, a communication channel changes randomly, and has frequency selectivity and a time-varying characteristic. Therefore, communication in an interference environment is a great challenge for the wireless communication technology. For example, a Bluetooth (Bluetooth, BT) technology is widely applied to car kits, headsets, remote control, and the like. A Bluetooth low energy (Bluetooth low energy, BLE) technology is an important part of the Bluetooth technology. A data part (Payload) in BLE adopts Gaussian frequency shift keying (Gaussian frequency Shift Keying, GFSK) modulation at a selectable coding rate of 1/2 or 1/8. During transmission, GFSK modulation at the coding rate of 1/8 may be selected in an environment with strong interference, and GFSK modulation at the coding rate of 1/2 may be selected in an environment with weak interference. However, a quality change of a radio channel is complex. If a selected BLE modulation scheme and coding rate still cannot adapt to a complex interference environment, it may cause unstable data transmission, for example, slow data transmission, music freezing, and voice discontinuity.

Therefore, how to enhance stability of data transmission is an urgent technical problem to be resolved.

**SUMMARY**

Embodiments of this application provide a data transmission method and apparatus, to enhance stability of data transmission.

According to a first aspect, an embodiment of this application discloses a data transmission method, including:

A first node receives a first modulation and coding scheme index MCS index from a second node.

The first node determines, based on the first MCS index and a predefined MCS information set, a first modulation and coding scheme corresponding to the first MCS index, where the first modulation and coding scheme includes at least one of a first modulation mode, a first modulation order, first coding rate indication information, or first transmission efficiency, and the first modulation mode is one of binary phase shift keying BPSK, quadrature phase shift keying QPSK, or 8 phase shift keying 8PSK.

The first node receives data from the second node or sends data to the second node based on the first modulation and coding scheme.

The first MCS index and the first modulation and coding scheme belong to a first MCS information subset, the first MCS information subset belongs to the predefined MCS information set, and the predefined MCS information set includes N MCS information subsets, where N is an integer, and 3≤N≤16.

Modulation modes in M MCS information subsets in the MCS information set are one or more of a BPSK subset, a QPSK subset, or an 8PSK subset, and coding rates corresponding to coding rate indication information in a plurality of MCS information subsets whose modulation modes are the same in the M MCS information subsets change evenly in ascending order, where M is an integer, and M≤N.

In this embodiment of this application, the second node determines the first MCS index from the MCS information set, and the first node and the second node may transmit data based on a modulation and coding scheme corresponding to the first MCS index. Because the MCS information set includes a plurality of modulation and coding schemes, and a same modulation mode usually includes a plurality of coding rates, flexibility of selecting a modulation and coding scheme is greatly improved. Further, the coding rates in the same modulation mode change evenly, so that a jump of a data throughput can be avoided, and stability of data transmission is enhanced. In addition, performance differences between the plurality of modulation and coding schemes are relatively even, so that an appropriate modulation and coding scheme can be selected under different channel quality, which improves data transmission efficiency and a throughput.

The first node and the second node each are an electronic device that has data processing, and receiving and sending capabilities, and may include an independent device, for example, a handheld terminal, a vehicle, an in-vehicle device, or a network side device, or may be a component (for example, a chip or an integrated circuit) included in the independent device. Different nodes may be configured to complete different functions. In a communication process, some nodes may manage other nodes. For example, a node may allocate a communication resource, or determine a communication mode.

In a possible design, as a management node (or referred to as a G node, a master node, or an uplink node), the second node may determine a modulation and coding scheme, allocate a communication resource, determine a communication mode, or the like for another node (including the first node). As a terminal node (or referred to as a T node, a slave node, or a downlink node), the first node may be managed by the second node. For example, the first node may receive the MCS index allocated by the second node. For another example, the first node receives the communication resource allocated by the second node. Further, the first node may feed back channel quality and the like to the second node, so that the second node obtains channel quality information in a timely manner.

In a possible implementation of the first aspect, the first node reports indication information to the second node. The indication information includes at least one of a signal to interference plus noise ratio SINR, an acknowledgment ACK, or a negative acknowledgment NACK, and the indication information is used to determine the first MCS index.

According to a second aspect, an embodiment of this application discloses a data transmission method, including:

A second node determines a first modulation and coding scheme index MCS index, where the first MCS index corresponds to a first modulation and coding scheme, the first modulation and coding scheme includes at least one of a first modulation mode, a first modulation order, first coding rate indication information, or first transmission efficiency, and the first modulation mode is one of binary phase shift keying BPSK, quadrature phase shift keying QPSK, or 8 phase shift keying 8PSK.

The second node sends the first MCS index to a first node.

The second node sends data to the first node or receives data from the first node based on the first modulation and coding scheme.

The first MCS index and the first modulation and coding scheme belong to a first MCS information subset, the first MCS information subset belongs to a predefined MCS information set, and the predefined MCS information set includes N MCS information subsets, where N is an integer, and $3 \leq N \leq 16$.

Modulation modes in M MCS information subsets in the MCS information set are one or more of a BPSK subset, a QPSK subset, or an 8PSK subset, and coding rates corresponding to coding rate indication information in a plurality of MCS information subsets whose modulation modes are the same in the M MCS information subsets change evenly in ascending order, where M is an integer, and $M \leq N$.

In this embodiment of this application, the second node determines the first MCS index from the MCS information set, and the first node and the second node may transmit data based on a modulation and coding scheme corresponding to the first MCS index. Because the MCS information set includes a plurality of modulation and coding schemes, and a same modulation mode usually includes a plurality of coding rates, flexibility of selecting a modulation and coding scheme is greatly improved. Further, the coding rates in the same modulation mode change evenly, so that a jump of a data throughput can be avoided, and stability of data transmission is enhanced. In addition, performance differences between the plurality of modulation and coding schemes are relatively even, so that an appropriate modulation and coding scheme can be selected under different channel quality, which improves data transmission efficiency and a throughput.

In a possible implementation of the second aspect, the method further includes:
The second node receives indication information from the first node.

In another possible implementation of the second aspect, the method further includes:
The second node determines the indication information based on quality of a communication channel.

In still another possible implementation of the first aspect and the second aspect, the M information subsets specifically include O information subsets whose modulation modes are the BPSK, P information subsets whose modulation modes are the QPSK, and Q information subsets whose modulation modes are the 8PSK, where O, P, and Q are all integers, $1 \leq Q \leq 16$, $1 \leq P \leq 16$, and $1 \leq Q \leq 16$.

In still another possible implementation of the first aspect and the second aspect, coding rates corresponding to first coding rate indication information in the O information subsets whose modulation modes are the BPSK change evenly in ascending order.

In still another possible implementation of the first aspect and the second aspect, coding rates corresponding to first coding rate indication information in the P information subsets whose modulation modes are the QPSK change evenly in ascending order.

In still another possible implementation of the first aspect and the second aspect, coding rates corresponding to first coding rate indication information in the Q information subsets whose modulation modes are the 8PSK change evenly in ascending order.

In still another possible implementation of the first aspect and the second aspect, the predefined MCS set includes a reserved value.

By setting the reserved value, an MCS information subset may be added based on a channel status in different application scenarios, so that a modulation and coding scheme applicable to a current application scenario is obtained, and flexibility is improved.

In still another possible implementation of the first aspect and the second aspect, there is at least one information subset whose modulation mode is the BPSK in the predefined MCS information set.

In still another possible implementation of the first aspect and the second aspect, transmission efficiency in the at least one information subset whose modulation mode is the BPSK includes one or more of 0.1250, 0.2500, 0.3333, 0.3750, 0.5000, 0.6250, 1.0000, or the like.

In still another possible implementation of the first aspect and the second aspect, a coding rate corresponding to the at least one information subset whose modulation mode is the BPSK includes one or more of 1/8, 1/4, 1/3, 3/8, 1/2, 5/8, 1, or the like.

In still another possible implementation of the first aspect and the second aspect, there is at least one information subset whose modulation mode is the QPSK in the predefined MCS information set.

In still another possible implementation of the first aspect and the second aspect, transmission efficiency in the at least one information subset whose modulation mode is the QPSK includes one or more of 0.2500, 0.5000, 0.6667, 0.7500, 1.0000, 1.2500, 1.3333, 1.5000, 1.6667, 1.7500, 2.0000, or the like.

In still another possible implementation of the first aspect and the second aspect, a coding rate corresponding to the at least one information subset whose modulation mode is the QPSK includes one or more of 1/8, 1/4, 1/3, 3/8, 1/2, 5/8, 2/3, 3/4, 5/6, 7/8, 1, or the like.

In still another possible implementation of the first aspect and the second aspect, there is at least one information subset whose modulation mode is the 8PSK in the predefined MCS information set.

In still another possible implementation of the first aspect and the second aspect, transmission efficiency in the at least one information subset whose modulation mode is the 8PSK includes one or more of 1.8750, 2.0000, 2.2500, 2.5000, 2.6250, 3.0000, or the like.

In still another possible implementation of the first aspect and the second aspect, a coding rate corresponding to the at least one information subset whose modulation mode is the 8PSK includes one or more of 5/8, 2/3, 3/4, 5/6, 7/8, or 1.

In the foregoing plurality of implementations, a coding rate corresponding to an information subset is a common fraction. A value of the fraction is relatively fixed, which facilitates calculation, packet splitting, and the like during coding. This reduces, when the coding rate is represented by using a decimal, transmission errors caused by different precisions obtained by different devices or in different calculation manners, and improves a possibility of correct data transmission.

In still another possible implementation of the first aspect and the second aspect, the first coding rate indication information indicates a first coding rate or indicates a product of a first coding rate and 1024.

In still another possible implementation of the first aspect and the second aspect, the predefined information set includes at least one information subset as follows:

{MCS index: a0, modulation scheme: BPSK, transmission efficiency: 0.3750, coding rate: 3/8}; or
the predefined information set includes at least one information subset as follows:
{MCS index: a0, modulation scheme: BPSK, coding rate x 1024: 384, transmission efficiency: 0.3750}.

In still another possible implementation of the first aspect and the second aspect, the predefined information set includes at least two information subsets as follows:

{MCS index: a0, modulation scheme: BPSK, transmission efficiency: 0.2500, coding rate: 1/4}, and
{MCS index: a1, modulation scheme: BPSK, transmission efficiency: 0.3750, coding rate: 3/8}; or
the predefined information set includes at least two information subsets as follows:

{MCS index: a0, modulation scheme: BPSK, coding rate x 1024: 256, transmission efficiency: 0.2500}, and

{MCS index: a1, modulation scheme: BPSK, coding rate x 1024: 384, transmission efficiency: 0.3750}.

In still another possible implementation of the first aspect and the second aspect, the predefined information set includes at least four information subsets as follows:

{MCS index: b0, modulation scheme: QPSK, transmission efficiency: 1.0000, coding rate: 1/2},

{MCS index: b1, modulation scheme: QPSK, transmission efficiency: 1.2500, coding rate: 5/8},
{MCS index: b2, modulation scheme: QPSK, transmission efficiency: 1.5000, coding rate: 3/4}, and
{MCS index: b3, modulation scheme: QPSK, transmission efficiency: 1.7500, coding rate: 7/8}; or
the predefined information set includes at least four information subsets as follows:

{MCS index: b0, modulation scheme: QPSK, coding rate x 1024: 512, transmission efficiency: 1.0000},
{MCS index: b1, modulation scheme: QPSK, coding rate x 1024: 640, transmission efficiency: 1.2500},
{MCS index: b2, modulation scheme: QPSK, coding rate x 1024: 768, transmission efficiency: 1.5000}, and
{MCS index: b3, modulation scheme: QPSK, coding rate x 1024: 896, transmission efficiency: 1.7500}.

In still another possible implementation of the first aspect and the second aspect, the predefined information set includes at least five information subsets as follows:

{MCS index: b0, modulation scheme: QPSK, transmission efficiency: 0.7500, coding rate: 3/8},
{MCS index: b1, modulation scheme: QPSK, transmission efficiency: 1.0000, coding rate: 1/2},
{MCS index: b2, modulation scheme: QPSK, transmission efficiency: 1.2500, coding rate: 5/8},
{MCS index: b3, modulation scheme: QPSK, transmission efficiency: 1.5000, coding rate: 3/4}, and
{MCS index: b4, modulation scheme: QPSK, transmission efficiency: 1.7500, coding rate: 7/8}; or
the predefined information set includes at least five information subsets as follows:

{MCS index: b0, modulation scheme: QPSK, coding rate x 1024: 384, transmission efficiency: 0.7500},
{MCS index: b1, modulation scheme: QPSK, coding rate x 1024: 512, transmission efficiency: 1.0000},
{MCS index: b2, modulation scheme: QPSK, coding rate x 1024: 640, transmission efficiency: 1.2500},
{MCS index: b3, modulation scheme: QPSK, coding rate x 1024: 768, transmission efficiency: 1.5000}, and
{MCS index: b4, modulation scheme: QPSK, coding rate x 1024: 896, transmission efficiency: 1.7500}.

In still another possible implementation of the first aspect and the second aspect, the predefined information set includes at least six information subsets as follows:

{MCS index: b0, modulation scheme: QPSK, transmission efficiency: 0.5000, coding rate: 1/4},
{MCS index: b1, modulation scheme: QPSK, transmission efficiency: 0.7500, coding rate: 3/8},
{MCS index: b2, modulation scheme: QPSK, transmission efficiency: 1.0000, coding rate: 1/2},
{MCS index: b3, modulation scheme: QPSK, transmission efficiency: 1.2500, coding rate: 5/8},
{MCS index: b4, modulation scheme: QPSK, transmission efficiency: 1.5000, coding rate: 3/4}, and
{MCS index: b5, modulation scheme: QPSK, transmission efficiency: 1.7500, coding rate: 7/8}; or
the predefined information set includes at least six information subsets as follows:

{MCS index: b0, modulation scheme: QPSK, coding rate x 1024: 256, transmission efficiency: 0.5000},
{MCS index: b1, modulation scheme: QPSK, coding rate x 1024: 384, transmission efficiency: 0.7500},
{MCS index: b2, modulation scheme: QPSK, coding rate x 1024: 512, transmission efficiency: 1.0000},
{MCS index: b3, modulation scheme: QPSK, coding rate x 1024: 640, transmission efficiency: 1.2500},
{MCS index: b4, modulation scheme: QPSK, coding rate x 1024: 768, transmission efficiency: 1.5000}, and
{MCS index: b5, modulation scheme: QPSK, coding rate x 1024: 896, transmission efficiency: 1.7500}.

In still another possible implementation of the first aspect and the second aspect, the predefined information set includes at least four information subsets as follows:

{MCS index: c0, modulation scheme: 8PSK, transmission efficiency: 1.8750, coding rate: 5/8},
{MCS index: c1, modulation scheme: 8PSK, transmission efficiency: 2.2500, coding rate: 3/4},
{MCS index: c2, modulation scheme: 8PSK, transmission efficiency: 2.6250, coding rate: 7/8}, and
{MCS index: c3, modulation scheme: 8PSK, transmission efficiency: 3.0000, coding rate: 1}; or
the predefined information set includes at least four information subsets as follows:

{MCS index: c0, modulation mode: 8PSK, coding rate x 1024: 640, transmission efficiency: 1.8750},
{MCS index: c1, modulation mode: 8PSK, coding rate x 1024: 768, transmission efficiency: 2.2500},
{MCS index: c2, modulation mode: 8PSK, coding rate x 1024: 896, transmission efficiency: 2.6250}, and
{MCS index: c3, modulation mode: 8PSK, coding rate x 1024: 1024, transmission efficiency: 3.0000}.

In still another possible implementation of the first aspect and the second aspect, the predefined information set includes at least three information subsets as follows:

{MCS index: a0, modulation scheme: BPSK, transmission efficiency: 0.3750, coding rate: 3/8},
{MCS index: a1, modulation scheme: BPSK, transmission efficiency: 0.5000, coding rate: 1/2}, and
{MCS index: a2, modulation scheme: BPSK, transmission efficiency: 1.0000, coding rate: 1}; or
the predefined information set includes at least one information subset as follows:

{MCS index: a0, modulation scheme: BPSK, coding rate x 1024: 384, transmission efficiency: 0.3750},
{MCS index: a1, modulation scheme: BPSK, coding rate x 1024: 512, transmission efficiency: 0.5000}, and
{MCS index: a2, modulation scheme: BPSK, coding rate x 1024: 1024, transmission efficiency: 1.0000}.

In still another possible implementation of the first aspect and the second aspect, the predefined information set includes at least six information subsets as follows:

{MCS index: b0, modulation scheme: QPSK, transmission efficiency: 0.7500, coding rate: 3/8},
{MCS index: b1, modulation scheme: QPSK, transmission efficiency: 1.0000, coding rate: 1/2},
{MCS index: b2, modulation scheme: QPSK, transmission efficiency: 1.2500, coding rate: 5/8},
{MCS index: b3, modulation scheme: QPSK, transmission efficiency: 1.5000, coding rate: 3/4},
{MCS index: b4, modulation scheme: QPSK, transmission efficiency: 1.7500, coding rate: 7/8}, and
{MCS index: b5, modulation scheme: QPSK, transmission efficiency: 2.0000, coding rate: 1}; or
the predefined information set includes at least six information subsets as follows:

{MCS index: b0, modulation scheme: QPSK, coding rate x 1024: 384, transmission efficiency: 0.7500},
{MCS index: b1, modulation scheme: QPSK, coding rate x 1024: 512, transmission efficiency: 1.0000},
{MCS index: b2, modulation scheme: QPSK, coding rate x 1024: 640, transmission efficiency: 1.2500},
{MCS index: b3, modulation scheme: QPSK, coding rate x 1024: 768, transmission efficiency: 1.5000},
{MCS index: b4, modulation scheme: QPSK, coding rate x 1024: 896, transmission efficiency: 1.7500}, and
{MCS index: b5, modulation scheme: QPSK, coding rate x 1024: 1024, transmission efficiency: 2.0000}.

In still another possible implementation of the first aspect and the second aspect, the predefined information set includes at least three information subsets as follows:

{MCS index: a0, modulation scheme: BPSK, transmission efficiency: 0.2500, coding rate: 1/4},
{MCS index: a1, modulation scheme: BPSK, transmission efficiency: 0.3750, coding rate: 3/8}, and
{MCS index: a2, modulation scheme: BPSK, transmission efficiency: 1.0000, coding rate: 1}; or
the predefined information set includes at least three information subsets as follows:

{MCS index: a0, modulation scheme: BPSK, coding rate x 1024: 256, transmission efficiency: 0.2500},
{MCS index: a1, modulation scheme: BPSK, coding rate x 1024: 384, transmission efficiency: 0.3750}, and
{MCS index: a2, modulation scheme: BPSK, coding rate x 1024: 1024, transmission efficiency: 1.0000}.

In still another possible implementation of the first aspect and the second aspect, the predefined information set includes at least seven information subsets as follows:

{MCS index: b0, modulation scheme: QPSK, transmission efficiency: 0.5000, coding rate: 1/4},
{MCS index: b1, modulation scheme: QPSK, transmission efficiency: 0.7500, coding rate: 3/8},
{MCS index: b2, modulation scheme: QPSK, transmission efficiency: 1.0000, coding rate: 1/2},
{MCS index: b3, modulation scheme: QPSK, transmission efficiency: 1.2500, coding rate: 5/8},
{MCS index: b4, modulation scheme: QPSK, transmission efficiency: 1.5000, coding rate: 3/4},
{MCS index: b5, modulation scheme: QPSK, transmission efficiency: 1.7500, coding rate: 7/8}, and
{MCS index: b6, modulation scheme: QPSK, transmission efficiency: 2.0000, coding rate: 1}; or
the predefined information set includes at least seven information subsets as follows:

{MCS index: b0, modulation scheme: QPSK, coding rate x 1024: 256, transmission efficiency: 0.5000},
{MCS index: b1, modulation scheme: QPSK, coding rate x 1024: 384, transmission efficiency: 0.7500},
{MCS index: b2, modulation scheme: QPSK, coding rate x 1024: 512, transmission efficiency: 1.0000},
{MCS index: b3, modulation scheme: QPSK, coding rate x 1024: 640, transmission efficiency: 1.2500},

{MCS index: b4, modulation scheme: QPSK, coding rate x 1024: 768, transmission efficiency: 1.5000},
{MCS index: b5, modulation scheme: QPSK, coding rate x 1024: 896, transmission efficiency: 1.7500}, and
{MCS index: b6, modulation scheme: QPSK, coding rate x 1024: 1024, transmission efficiency: 2.0000}.

In still another possible implementation of the first aspect and the second aspect, the predefined information set includes at least four information subsets as follows:

{MCS index: a0, modulation scheme: BPSK, transmission efficiency: 0.2500, coding rate: 1/4},
{MCS index: a1, modulation scheme: BPSK, transmission efficiency: 0.3750, coding rate: 3/8},
{MCS index: a2, modulation scheme: BPSK, transmission efficiency: 0.5000, coding rate: 1/2}, and
{MCS index: a3, modulation scheme: BPSK, transmission efficiency: 1.0000, coding rate: 1}; or
the predefined information set includes at least four information subsets as follows:

{MCS index: a0, modulation scheme: BPSK, coding rate x 1024: 256, transmission efficiency: 0.2500},
{MCS index: a1, modulation scheme: BPSK, coding rate x 1024: 384, transmission efficiency: 0.3750},
{MCS index: a2, modulation scheme: BPSK, coding rate x 1024: 512, transmission efficiency: 0.5000}, and
{MCS index: a3, modulation scheme: BPSK, coding rate x 1024: 1024, transmission efficiency: 1.0000}.

In still another possible implementation of the first aspect and the second aspect, the predefined information set includes at least five information subsets as follows:

{MCS index: a0, modulation scheme: BPSK, transmission efficiency: 0.2500, coding rate: 1/4},
{MCS index: a1, modulation scheme: BPSK, transmission efficiency: 0.3750, coding rate: 3/8},
{MCS index: a2, modulation scheme: BPSK, transmission efficiency: 0.5000, coding rate: 1/2},
{MCS index: a3, modulation scheme: BPSK, transmission efficiency: 0.6250, coding rate: 5/8}, and
{MCS index: a4, modulation scheme: BPSK, transmission efficiency: 1.0000, coding rate: 1}; or
the predefined information set includes at least five information subsets as follows:

{MCS index: a0, modulation scheme: BPSK, coding rate x 1024: 256, transmission efficiency: 0.2500},
{MCS index: a1, modulation scheme: BPSK, coding rate x 1024: 384, transmission efficiency: 0.3750},
{MCS index: a2, modulation scheme: BPSK, coding rate x 1024: 512, transmission efficiency: 0.5000},
{MCS index: a3, modulation scheme: BPSK, coding rate x 1024: 640, transmission efficiency: 0.6250}, and
{MCS index: a4, modulation scheme: BPSK, coding rate x 1024: 1024, transmission efficiency: 1.0000}.

In still another possible implementation of the first aspect and the second aspect, the predefined information set includes at least five information subsets as follows:

{MCS index: b0, modulation scheme: QPSK, transmission efficiency: 1.0000, coding rate: 1/2},
{MCS index: b1, modulation scheme: QPSK, transmission efficiency: 1.2500, coding rate: 5/8},
{MCS index: b2, modulation scheme: QPSK, transmission efficiency: 1.5000, coding rate: 3/4},
{MCS index: b3, modulation scheme: QPSK, transmission efficiency: 1.7500, coding rate: 7/8}, and
{MCS index: b4, modulation scheme: QPSK, transmission efficiency: 2.0000, coding rate: 1}; or
the predefined information set includes at least five information subsets as follows:

{MCS index: b0, modulation scheme: QPSK, coding rate x 1024: 512, transmission efficiency: 1.0000},
{MCS index: b1, modulation scheme: QPSK, coding rate x 1024: 640, transmission efficiency: 1.2500},
{MCS index: b2, modulation scheme: QPSK, coding rate x 1024: 768, transmission efficiency: 1.5000},
{MCS index: b3, modulation scheme: QPSK, coding rate x 1024: 896, transmission efficiency: 1.7500}, and
{MCS index: b4, modulation scheme: QPSK, coding rate x 1024: 1024, transmission efficiency: 2.0000}.

In still another possible implementation of the first aspect and the second aspect, the predefined information set includes at least three information subsets as follows:

{MCS index: a0, modulation scheme: BPSK, transmission efficiency: 0.2500, coding rate: 1/4},
{MCS index: a1, modulation scheme: BPSK, transmission efficiency: 0.3333, coding rate: 1/3}, and
{MCS index: a2, modulation scheme: BPSK, transmission efficiency: 1.0000, coding rate: 1}; or
the predefined information set includes at least three information subsets as follows:

{MCS index: a0, modulation scheme: BPSK, coding rate x 1024: 256, transmission efficiency: 0.2500},
{MCS index: a1, modulation scheme: BPSK, coding rate x 1024: 341, transmission efficiency: 0.3333}, and
{MCS index: a2, modulation scheme: BPSK, coding rate x 1024: 1024, transmission efficiency: 1.0000}.

In still another possible implementation of the first aspect and the second aspect, the predefined information set includes at least seven information subsets as follows:

{MCS index: b0, modulation scheme: QPSK, transmission efficiency: 0.5000, coding rate: 1/4},
{MCS index: b1, modulation scheme: QPSK, transmission efficiency: 0.6667, coding rate: 1/3},
{MCS index: b2, modulation scheme: QPSK, transmission efficiency: 1.0000, coding rate: 1/2},
{MCS index: b3, modulation scheme: QPSK, transmission efficiency: 1.3333, coding rate: 2/3},
{MCS index: b4, modulation scheme: QPSK, transmission efficiency: 1.5000, coding rate: 3/4},
{MCS index: b5, modulation scheme: QPSK, transmission efficiency: 1.6667, coding rate: 5/6}, and
{MCS index: b6, modulation scheme: QPSK, transmission efficiency: 2.0000, coding rate: 1}; or
the predefined information set includes at least seven information subsets as follows:

{MCS index: b0, modulation scheme: QPSK, coding rate x 1024: 256, transmission efficiency: 0.5000},
{MCS index: b1, modulation scheme: QPSK, coding rate x 1024: 341, transmission efficiency: 0.6667},
{MCS index: b2, modulation scheme: QPSK, coding rate x 1024: 512, transmission efficiency: 1.0000},
{MCS index: b3, modulation scheme: QPSK, coding rate x 1024: 683, transmission efficiency: 1.3333},
{MCS index: b4, modulation scheme: QPSK, coding rate x 1024: 768, transmission efficiency: 1.5000},
{MCS index: b5, modulation scheme: QPSK, coding rate x 1024: 853, transmission efficiency: 1.6667}, and
{MCS index: b6, modulation scheme: QPSK, coding rate x 1024: 1024, transmission efficiency: 2.0000}.

In still another possible implementation of the first aspect and the second aspect, the predefined information set includes at least four information subsets as follows:

{MCS index: c0, modulation scheme: 8PSK, transmission efficiency: 2.0000, coding rate: 2/3},
{MCS index: c1, modulation scheme: 8PSK, transmission efficiency: 2.2500, coding rate: 3/4},
{MCS index: c2, modulation scheme: 8PSK, transmission efficiency: 2.5000, coding rate: 5/6}, and
{MCS index: c3, modulation scheme: 8PSK, transmission efficiency: 3.0000, coding rate: 1}; or
the predefined information set includes at least four information subsets as follows:

{MCS index: c0, modulation mode: 8PSK, coding rate x 1024: 683, transmission efficiency: 2.0000},
{MCS index: c1, modulation mode: 8PSK, coding rate x 1024: 768, transmission efficiency: 2.2500},
{MCS index: c2, modulation mode: 8PSK, coding rate x 1024: 853, transmission efficiency: 2.5000}, and
{MCS index: c3, modulation mode: 8PSK, coding rate x 1024: 1024, transmission efficiency: 3.0000}.

In the foregoing implementation, a plurality of coding rates are usually designed in a same modulation mode, which improves flexibility of selecting a modulation and coding scheme. A coding rate corresponding to coding rate indication information is a common fraction, and corresponding coding rates change evenly in a plurality of information subsets in which modulation schemes are the same. According to the solutions provided in embodiments of this application, a jump of a data throughput can be avoided, communication stability can be enhanced, and a throughput can be improved.

According to a third aspect, an embodiment of this application discloses a data transmission apparatus. The data transmission apparatus is configured to implement the data transmission method according to any one of the first aspect or the possible implementations of the first aspect.

In a possible implementation of the third aspect, the data transmission apparatus includes a communication unit and a processing unit.

According to a fourth aspect, an embodiment of this application discloses a data transmission apparatus. The data transmission apparatus is configured to implement the data transmission method according to any one of the second aspect or the possible implementations of the second aspect.

In a possible implementation of the fourth aspect, the data transmission apparatus includes a communication unit and a processing unit.

According to a fifth aspect, an embodiment of this application discloses a data transmission apparatus, including a processor and a communication interface. The processor is configured to invoke a computer program stored in a memory, to implement the method according to any one of the first aspect or the possible implementations of the first aspect.

**EP 4 354 768 A1**

According to a sixth aspect, an embodiment of this application discloses a communication apparatus, including a processor and a communication interface. The processor is configured to invoke a computer program stored in a memory, to implement any one of the first aspect or the possible implementations of the first aspect.

It should be noted that the processor included in the data transmission apparatus described in the sixth aspect or the seventh aspect may be a processor (referred to as a dedicated processor for ease of differentiation) specially configured to perform these methods, or may be a processor that executes these methods by invoking the computer program, for example, a general-purpose processor. Optionally, at least one processor may further include both a dedicated processor and a general-purpose processor.

Optionally, the computer program may be stored in the memory. For example, the memory may be a non-transitory (non-transitory) memory such as a read-only memory (Read-Only Memory, ROM). The memory and the processor may be integrated into a same component, or may be separately disposed on different components. A type of the memory and a manner in which the memory and the processor are disposed are not limited in this embodiment of this application.

In a possible implementation, at least one memory is located outside the data transmission apparatus.

In another possible implementation, the at least one memory is located in the data transmission apparatus.

In still another possible implementation, some memories of the at least one memory are located in the data transmission apparatus, and the other memories are located outside the data transmission apparatus.

In this application, the processor and the memory may alternatively be integrated into one component. In other words, the processor and the memory may alternatively be integrated together.

According to a seventh aspect, an embodiment of this application further provides a chip system. The chip system includes at least one processor and a communication interface. The communication interface is configured to send and/or receive data, and/or the communication interface is configured to provide input/output for the at least one processor. The at least one processor is configured to invoke a computer program, so that the chip system implements the method according to any one of the first aspect or the possible implementations of the first aspect, or implements the method according to any one of the second aspect or the possible implementations of the second aspect.

According to an eighth aspect, an embodiment of this application further provides a communication system, including a first node and a second node. The first node includes the communication apparatus according to any one of the third aspect or the possible implementations of the third aspect, or includes the communication apparatus according to any one of the fifth aspect or the possible implementations of the fifth aspect. The second node includes the communication apparatus according to any one of the fourth aspect or the possible implementations of the fourth aspect, or includes the communication apparatus according to any one of the sixth aspect or the possible implementations of the sixth aspect.

According to a ninth aspect, an embodiment of this application discloses a computer-readable storage medium. The computer-readable storage medium stores a computer program. When the computer program is run on a computer, the computer is enabled to perform the method according to any one of the first aspect or the possible implementations of the first aspect, or perform the method according to any one of the second aspect or the possible implementations of the second aspect.

According to a tenth aspect, an embodiment of this application discloses a computer program product. When the computer program product runs on one or more processors, the method according to any one of the first aspect or the possible implementations of the first aspect is performed, or the method according to any one of the second aspect or the possible implementations of the second aspect is performed.

According to an eleventh aspect, an embodiment of this application discloses a terminal. The terminal may be an intelligent cockpit product, a vehicle, or the like, and the terminal includes a first node (for example, a vehicle cockpit domain controller CDC or a vehicle central control node).

The first node is configured to implement the method according to any one of the possible implementations of the first aspect or the second aspect.

In a possible implementation of the eleventh aspect, the terminal further includes a second node (for example, one or more of modules such as a camera, a screen, a microphone, a speaker, a radar, an electronic key, a passive entry passive start system controller, and user equipment UE).

The second node is configured to implement the method according to any one of the second aspect or the possible implementations of the second aspect.

Alternatively, the vehicle may be replaced with an intelligent terminal such as a drone or a robot, or a transportation vehicle.

**BRIEF DESCRIPTION OF DRAWINGS**

The following describes the accompanying drawings used in embodiments of this application.

9

FIG. 1 is a schematic diagram of an architecture of a wireless communication system according to an embodiment of this application;

FIG. 2 is a schematic diagram of a scenario of wireless communication in a vehicle according to an embodiment of this application;

FIG. 3 is a schematic diagram of performance of a modulation and coding mode according to an embodiment of this application;

FIG. 4 is a schematic flowchart of a data transmission method according to an embodiment of this application;

FIG. 5 is a schematic diagram of an MCS index determining method according to an embodiment of this application;

FIG. 6 is a schematic diagram of another MCS index determining method according to an embodiment of this application;

FIG. 7 is a schematic diagram of another MCS index determining method according to an embodiment of this application;

FIG. 8 is a schematic diagram of a structure of a data transmission apparatus according to an embodiment of this application; and

FIG. 9 is a schematic diagram of a structure of another data transmission apparatus according to an embodiment of this application.

## DESCRIPTION OF EMBODIMENTS

The following describes embodiments of this application with reference to the accompanying drawings in embodiments of this application.

For ease of understanding, the following provides example descriptions of some concepts related to embodiments of this application for reference. Details are described as follows:

1. Node

The node in embodiments of this application may be an electronic device that has data processing, and receiving and sending capabilities. The node may include an independent device, for example, a handheld terminal, a vehicle, an in-vehicle device, or a network side device, or may be a component (for example, a chip or an integrated circuit) included in the independent device.

For example, when a terminal apparatus is the in-vehicle device, the node may be a vehicle cockpit domain (cockpit domain) device, or a module in the vehicle cockpit domain device, for example, one or more of modules such as a cockpit domain controller (cockpit domain controller, CDC), a camera, a screen, a microphone, a speaker, an electronic key, or a passive entry passive start system controller.

For example, when the terminal apparatus is the handheld terminal, the node may be a mobile phone (mobile phone), a wearable device, a tablet computer (pad), a computer (for example, a notebook computer or a palmtop computer) with a data receiving and sending function, or the like.

The node in embodiments of this application may be applied to a plurality of application scenarios, for example, the following application scenarios: mobile internet (mobile internet, MI), industrial control (industrial control), self-driving (self-driving), transportation safety (transportation safety), internet of things (internet of things, IoT), smart city (smart city), or smart home (smart home).

The node in this application may be applied to a plurality of network types, for example, the following network types: a long term evolution (long term evolution, LTE) network, a 5th generation mobile communication technology (5th Generation Mobile Communication Technology, 5G), a wireless local area network (for example, Wi-Fi), Bluetooth (Bluetooth, BT), Zigbee (Zigbee), or an in-vehicle short-range wireless communication network.

In some application scenarios or some network types, a name of a device having a similar data receiving and sending capability may not be referred to as a node. However, for ease of description, electronic devices having data receiving and sending capabilities are collectively referred to as nodes in embodiments of this application.

2. Modulation mode (or modulation scheme)

In a wireless communication process, a baseband signal is moved to a high-frequency carrier signal for transmission. This process of loading a to-be-sent signal to a high-frequency carrier signal is referred to as modulation. Common modulation modes include phase shift keying (Phase Shift Keying, PSK), quadrature amplitude modulation (Quadrature Amplitude Modulation), and the like. During actual application, the PSK includes binary phase shift keying (Binary Phase Shift Keying, BPSK), quadrature phase shift keying (Quadrature Phase Shift Keying, QPSK), 8 phase shift keying (8 Phase Shift Keying, 8PSK), and the like. The QAM includes 16QAM, 64QAM, 256QAM, and the like.

Different modulation modes usually correspond to different modulation orders, which may be specifically shown in Table 1. If a modulation order of the BPSK is 1, one modulation symbol obtained through BPSK modulation corresponds to 1-bit (bit) data.

**Table 1 Modulation modes and corresponding modulation orders**

| Sequence number | Modulation mode | Modulation order |
|---|---|---|
| 1 | BPSK | 1 |
| 2 | QPSK | 2 |
| 3 | 8PSK | 3 |
| 4 | 16QAM | 4 |
| 5 | 64QAM | 6 |
| 6 | 256QAM | 8 |
| ... | ... | ... |

3. Transmission efficiency

The transmission efficiency (Transmission efficiency) describes a ratio of valid data to total transmitted data in a transmission process. In some scenarios, the transmission efficiency may also be referred to as transmission spectral efficiency or spectral efficiency, or is also referred to as efficiency (efficiency) for short in the communication field.

Usually, a relationship among transmission efficiency, a modulation order, and a coding rate (or referred to as a code rate) may satisfy the following formula:

$$\text{Transmission efficiency} = \text{Modulation order} \times \text{Coding rate}$$

To be specific, when a modulation mode is BPSK and a coding rate is 1/2, one modulation symbol can carry 1-bit data, and the valid data occupies 1/2 of the total transmitted data. In this case, the transmission efficiency is 0.5000. When the modulation mode is QPSK and the coding rate is 1/2, one modulation symbol can carry 2-bit data, and the valid data occupies 1/2 of the total transmitted data. In this case, the transmission efficiency is 1.0000.

It should be understood that in embodiments of this application, a quantity of decimal places of an indicator such as the transmission efficiency is accurate to four, and this application is also applicable to a case in which another precision is used.

4. Evenness

The evenness is used to describe the same or similar distribution of parts of an object.

In embodiments of this application, that a plurality of coding rates are evenly distributed indicates that when the coding rates are arranged in ascending order, there is a same difference between every two adjacent coding rates, or a difference between two adjacent coding rates produces a small fluctuation around a value (which is referred to as a preset value D for ease of description). The preset value D may be predefined, specified, or preconfigured. A range of the preset value D may be usually [1/12, 1/3], and a fluctuation range is usually less than 1/2.

In some examples, in addition to a special case in which a coding rate is 1, when a plurality of other coding rates are arranged in ascending order, there is a same difference between every two adjacent coding rates.

It should be understood that, to facilitate description of a difference between coding rates, a case in which the coding rates are arranged in ascending order is used for description herein, and a case in which the coding rates are arranged in descending order is also applicable.

It should be noted that an arrangement order of information subsets in an information set, elements in a table, or the like described in embodiments of this application may be randomly changed. The arrangement order is not limited in this application.

Descriptions of the foregoing related concepts may be applied to the following embodiments.

The following describes a system architecture and a service scenario in embodiments of this application.

It should be noted that the system architecture and the service scenario described in this application are intended to describe the technical solutions in this application more clearly, and do not constitute a limitation on the technical solutions provided in this application. A person of ordinary skill in the art may know that with evolution of the system architecture and emergence of new service scenarios, the technical solutions provided in this application are also applicable to similar technical problems.

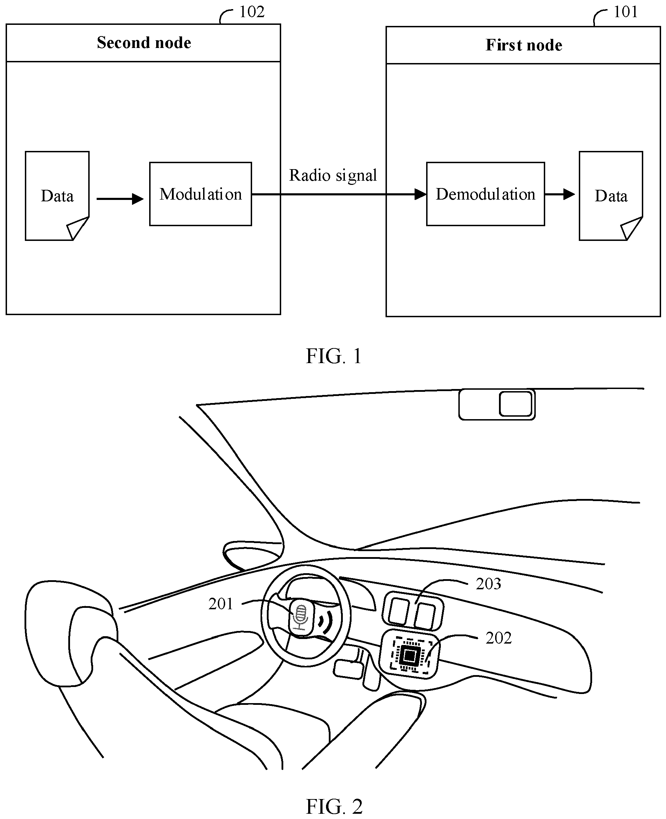

FIG. 1 is a schematic diagram of an architecture of a possible wireless communication system according to an embodiment of this application. The system shown in FIG. 1 includes a first node 101 and a second node 102. When sending data to the first node 101, the second node 102 may encode and modulate the data according to a modulation and coding scheme to form a modulation symbol, and then send the modulation symbol through an antenna. A radio signal sent through the antenna is received by the first node 101, and the first node 101 demodulates and decodes the radio signal according to the modulation and coding scheme, to obtain the data from the second node 102.

It should be noted that a radio link for communication between the first node 101 and the second node 102 may be implemented by using one or more network technologies. For example, the radio link uses a short-range connection technology including, for example, an 802.11b/g technology, a Bluetooth (Bluetooth) technology, a Zigbee (Zigbee) technology, a radio frequency identification (Radio Frequency Identification, RFID) technology, an ultra wideband (Ultra Wideband, UWB) technology, a short-range wireless communication (for example, in-vehicle short-range wireless communication) technology, or a vehicle to everything (vehicle to everything, V2X, information exchange from vehicle to the outside). For another example, the radio link may alternatively use a long-distance connection technology including, for example, a radio access type technology such as a global system for mobile communications (Global System for Mobile communications, GSM), a general packet radio service (General Packet Radio Service, GPRS), a universal mobile telecommunications system (Universal Mobile Telecommunications System, UMTS), LTE, or 5G.

In some specific implementation scenarios, the second node 102 may also be referred to as a management (grant) node, a control node, or a G node, and the first node 101 may also be referred to as a terminal (terminal) node or a T node. Further, a transmission link from the G node to the T node may be referred to as a G link or a downlink, and a transmission link from the T node to the G node may be referred to as a T link or an uplink.

In a wireless communication process, a communication channel changes randomly, and has frequency selectivity and a time-varying characteristic. Therefore, communication in an interference environment is a great challenge for a wireless communication technology. For example, refer to FIG. 2. FIG. 2 is a schematic diagram of a scenario of wireless communication in a vehicle according to an embodiment of this application.

A microphone 201 that supports a wireless communication technology in the vehicle may be considered as a first node 101, and a CDC 202 in the vehicle is a control center in an intelligent cockpit device and may be considered as a second node 102. A wireless connection may be established between the CDC 202 and the microphone 201, to reduce a quantity of harnesses in the vehicle. In a vehicle working process, the CDC 202 may receive, by using the wireless communication technology, audio and the like recorded by using the microphone 201, to help record a driving process.

For another example, a display device 203 that supports a wireless communication technology in the vehicle may alternatively be considered as the first node 101, and a wireless connection may be established between the CDC 202 and the display device 203. In this way, the display device 203 may receive and play a video sent by the CDC 202.

A wireless communication channel may change at any time. For example, when channel quality is poor, if a signal in the channel uses a relatively high coding rate, a relatively large quantity of errors may be generated, resulting in low transmission efficiency. In the foregoing scenario in which the CDC 202 communicates with the microphone 201, audio collected by the CDC may be intermittent, a transmission speed is slow, transmission efficiency is low, and user experience is poor. However, when the channel quality is good, if a relatively low coding rate is used, channel bandwidth may be wasted, resulting in reduction of a data throughput. In the foregoing scenario in which the CDC 202 communicates with the microphone 201, a channel condition for playing a high-definition video (which has a relatively high video resolution) only supports playing a standard-definition video (which has a relatively low video resolution), and the data throughput is low.

In view of this, embodiments of this application support a plurality of optional modulation and coding schemes. During data transmission, the modulation and coding schemes can be dynamically adjusted. For example, when channel quality is relatively poor, for example, when channel interference is relatively strong, a relatively low-order modulation and coding scheme (to be specific, a signal-to-noise ratio requirement is low, and a transmission rate is also relatively slow) is selected; or when channel conditions are relatively good, for example, when channel interference is relatively weak, a relatively high-order modulation and coding scheme (to be specific, a signal-to-noise ratio requirement is high, and a transmission rate is also relatively fast) may be selected; and therefore, a transmission capability of a radio channel can be properly used, an anti-interference capability can be improved, and a data transmission rate can be improved.

**Embodiment 1**

An embodiment of this application provides a modulation and coding scheme (Modulation and Coding Scheme, MCS) information set. The MCS information set includes N MCS information subsets, where N is an integer, for example, N=1, 2, 3.... The MCS information set includes one or more pieces of the following information: an MCS index (MCS index, which is also referred to as a modulation and coding index, where the modulation and coding index is used for description below), a modulation mode, a modulation order, a coding rate, transmission efficiency, a reserved value, and the like. The modulation mode may include one or more of BPSK, QPSK, 8PSK, or the like.

The MCS index is used to index an MCS information subset. One MCS index may correspond to one information subset, and one MCS index corresponds to one modulation and coding scheme. For example, the MCS information set includes a first MCS information subset, and the first MCS information subset includes a first MCS index and a first modulation and coding scheme. In other words, the first MCS index corresponds to the first modulation and coding scheme.

Further, the first modulation and coding scheme includes one or more of a first modulation mode, a first modulation order, first coding rate indication information, and first transmission efficiency. The first coding rate indication information indicates a first coding rate or indicates a product of a first coding rate and 1024 (which is referred to as coding rate x 1024 for ease of description). For ease of understanding, the following provides several possible designs.

Design 1: The first modulation and coding scheme may include the first modulation mode and the first transmission efficiency. For example, a modulation and coding scheme is as follows: {modulation mode: BPSK, transmission efficiency: 0.3750}. The modulation and coding scheme indicates that a BPSK modulation mode is used, and a coding rate is 3/8 (Coding rate = Transmission efficiency/Modulation order of a modulation mode = 0.375/1 = 3/8).

Design 2: The first modulation and coding scheme may include the first modulation mode, the first coding rate indication information, and the first transmission efficiency. For example, the first coding rate indication information indicates a product of a coding rate and 1024. A modulation and coding scheme is as follows: {modulation mode: BPSK, coding rate x 1024: 384, transmission efficiency: 0.3750}. The modulation and coding scheme indicates that a BPSK modulation mode is used, and a coding rate is 3/8.

Design 3: The first modulation and coding scheme may include the first modulation order, the first coding rate indication information, and the first transmission efficiency. For example, the first coding rate indication information indicates a product of a coding rate and 1024. A modulation and coding scheme is as follows: {Qx: 1, coding rate x 1024: 384, transmission efficiency: 0.3750}. Because a modulation order of a BPSK modulation scheme is 1, the modulation and coding scheme indicates that the BPSK modulation mode is used, and a coding rate is 3/8.

Design 4: The first modulation and coding scheme may include the first modulation order, the first transmission efficiency, and the first coding rate indication information. For example, the first coding rate indication information indicates a coding rate. A modulation and coding scheme is as follows: {modulation mode: BPSK, coding rate x 1024: 384, transmission efficiency: 0.3750}. The modulation and coding scheme indicates that a BPSK modulation mode is used, and a coding rate is 3/8.

Certainly, there may be another possible design for the first modulation and coding scheme. Details are not described herein.

In a design, 3≤N≤16. The MCS information set includes at least three MCS information subsets, and in compassion with a BLE technology and the like, more modulation and coding schemes may be provided for selection. In addition, too many modulation and coding schemes may cause too much sensitivity to channel quality, and consequently, a large amount of time is consumed in switching the modulation and coding schemes, affecting transmission efficiency, especially for some scenarios in which interference conditions do not change extremely, for example, a home scenario and a vehicle scenario. Therefore, 16 MCS information sets are used to meet different channel quality changes, and reduce resource consumption.

Optionally, the MCS information set may include a reserved (reserved) value. For example, the MCS information set may include 16 information subsets, some information subsets each include an MCS index and a modulation and coding scheme, and some information subsets each are a reserved value. The reserved value is a value that does not define specific content. Certainly, in a subsequent use process, the reserved value may be modified based on a use requirement to obtain an MCS index and a modulation and coding scheme. Setting the reserved value may facilitate adding a modulation and coding scheme based on a requirement or a usage scenario, to obtain a modulation and coding scheme applicable to a current usage scenario, and improve flexibility of the modulation and coding scheme. In another possible design, the MCS information set includes M MCS information subsets. Modulation modes in the M MCS information subsets are one or more of a BPSK subset, a QPSK subset, or an 8PSK subset, where M is an integer, and M≤N. Coding rates corresponding to coding rate indication information in a plurality of MCS information subsets whose modulation modes are the same in the M MCS information subsets change evenly in ascending order.

Because a channel change is time-varying, that is, channel quality is usually continuously changed over time. In this embodiment of this application, the coding rate changes evenly. Therefore, selection can be performed based on a change of the channel quality, to avoid a jump of a data throughput and enhance communication stability. In addition, the coding rate changes evenly, so that transmission efficiency accordingly changes evenly. Therefore, proper transmission efficiency can be obtained and a throughput can be improved under different channel quality.

For example, there may be one or more of the following three cases for the information subset in the MCS information set:

Case 1: The MCS information set may include one or more MCS information subsets whose modulation modes are the BPSK. For example, O MCS information subsets whose modulation modes are the BPSK are included, where O is an integer, and 1≤O. Further, 1≤O≤16.

For example, refer to Table 2. Table 2 is a schematic table of a possible information subset according to an embodiment of this application. The MCS information set may include the information subset shown in Table 2, and the information subset includes one information subset whose modulation mode is the BPSK. The information subset includes a modulation and coding index (namely, an MCS index), a modulation scheme, coding rate indication information (namely, coding rate x 1024), and transmission efficiency.

**Table 2 One information subset in the MCS information set**

| MCS table | | | |
| --- | --- | --- | --- |
| Modulation and coding index | Modulation scheme | Coding rate (R) x 1024 | Transmission efficiency |
| 0 | BPSK | 384 | 0.3750 |

It should be noted that the modulation and coding index provided in this application is merely used as an example index, and an implementation form and a value of the modulation and coding index are not limited in this application. For example, the modulation and coding index may be a number, for example, 0, 1, 2, or 3. For another example, the modulation and coding index may be a letter, for example, a, b, c, or d. For another example, the modulation and coding index may be a predefined identifier, a variable, or the like.

Further, when the MCS information set includes a plurality of MCS information subsets whose modulation modes are the BPSK, coding rates corresponding to coding rate indication information in the plurality of MCS information subsets are different.

Further, coding rates corresponding to coding rate indication information in the O MCS information subsets change evenly in ascending order. For example, refer to Table 3. Table 3 shows another possible information subset whose modulation mode is the BPSK in this application. The information subset may include four MCS information subsets whose modulation modes are the BPSK, and coding rates of the four MCS information subsets separately are {1/4, 3/8, 1/2, 1} in ascending order. After the MCS information subset whose coding rate is 1 is removed, a difference between adjacent rate values in other MCS information subsets is 1/8.

**Table 3 A plurality of information subsets in the MCS information set**

| MCS table | | | |
| --- | --- | --- | --- |
| Modulation and coding index | Modulation scheme | Transmission efficiency | Coding rate (R) |
| 0 | BPSK | 0.2500 | 1/4 |
| 1 | BPSK | 0.3750 | 3/8 |
| 2 | BPSK | 0.5000 | 1/2 |
| 3 | BPSK | 1.0000 | 1 |

It should be understood that the foregoing MCS information set is merely an example. In a possible case, the MCS information subset may not directly include a coding rate, but may indicate a coding rate by using coding rate indication information. For example, refer to Table 4. Table 4 shows another possible information subset whose modulation mode is the BPSK in this application. Transmission efficiency in four MCS information subsets shown in Table 4 separately is {0.2500, 0.3750, 0.5000, 1.0000}, and a modulation order of a BPSK modulation scheme is 1, so that corresponding coding rates separately are {1/4, 3/8, 1/2, 1} in ascending order. Alternatively, four MCS information subsets shown in Table 4 each include an indicator "coding rate x 1024", and this indicator indicates a product of a coding rate and 1024. It may be determined, by using the indicators, that the coding rates are {1/4, 3/8, 1/2, 1}.

**Table 4 A plurality of information subsets in the MCS information set**

| MCS table | | | |
| --- | --- | --- | --- |
| Modulation and coding index | Modulation scheme | Coding rate (R) x 1024 | Transmission efficiency |
| 0 | BPSK | 256 | 0.2500 |
| 1 | BPSK | 384 | 0.3750 |

(continued)

| MCS table | | | |
|---|---|---|---|
| Modulation and coding index | Modulation scheme | Coding rate (R) x 1024 | Transmission efficiency |
| 2 | BPSK | 512 | 0.5000 |
| 3 | BPSK | 1024 | 1.0000 |

Case 2: The MCS information set may include one or more MCS information subsets whose modulation modes are the QPSK. For example, P MCS information subsets whose modulation modes are the QPSK are included, where P is an integer, and 1≤P. Further, 1≤P≤16.

Further, when the MCS information set includes a plurality of MCS information subsets whose modulation modes are the QPSK, code values of the plurality of MCS information subsets are different.

Further, coding rates of the P MCS information subsets change evenly in ascending order. For detailed description, refer to Case 1. For example, refer to Table 5. Table 5 shows another possible information subset whose modulation mode is the QPSK in this application. Transmission efficiency in six MCS information subsets shown in Table 5 separately is {0.5000, 0.7500, 1.0000, 1.2500, 1.5000, 1.7500}, and a modulation order of a BPSK modulation scheme is 2, so that corresponding coding rates separately are { 1/4, 3/8, 1/2, 5/8, 3/4, 7/8, 1} in ascending order. It can be learned that a difference between adjacent rate values is 1/8.

**Table 5 A plurality of information subsets in the MCS information set**

| MCS table | | | |
|---|---|---|---|
| Modulation and coding index | Modulation scheme | Coding rate (R) x 1024 | Transmission efficiency |
| 0 | QPSK | 256 | 0.5000 |
| 1 | QPSK | 384 | 0.7500 |
| 2 | QPSK | 512 | 1.0000 |
| 3 | QPSK | 640 | 1.2500 |
| 2 | QPSK | 768 | 1.5000 |
| 3 | QPSK | 896 | 1.7500 |

Case 3: The MCS information set may include one or more MCS information subsets whose modulation modes are the 8PSK. For example, Q MCS information subsets whose modulation modes are the 8PSK are included, where P is an integer, and 1≤Q. Further, 1≤Q≤16.

Further, when the MCS information set includes a plurality of MCS information subsets whose modulation modes are the 8PSK, code values of the plurality of MCS information subsets are different.

Further, coding rates of the Q MCS information subsets change evenly in ascending order. For detailed description, refer to Case 1. For example, refer to Table 6. Table 6 shows another possible information subset whose modulation mode is the 8PSK in this application. Transmission efficiency in four MCS information subsets shown in Table 3 separately is {1.8750, 2.2500, 2.6250, 3.0000}, and a modulation order of a BPSK modulation scheme is 3, so that corresponding coding rates separately are {5/8, 3/4, 7/8, 1} in ascending order. It can be learned that a difference between adjacent rate values is 1/8.

**Table 6 A plurality of information subsets in the MCS information set**

| MCS table | | | |
|---|---|---|---|
| Modulation and coding index | Modulation scheme | Coding rate (R) x 1024 | Transmission efficiency |
| 0 | 8PSK | 640 | 1.8750 |
| 1 | 8PSK | 768 | 2.2500 |
| 2 | 8PSK | 896 | 2.6250 |
| 3 | 8PSK | 1024 | 3.0000 |

It should be understood that the MCS information set may meet one of Case 1 to Case 3, or may meet two of the foregoing cases, or may meet all the three cases.

In still another design, there may be the following several possible examples for the information subset in the MCS information set:

Example 1: There are one or more information subsets whose modulation modes are the BPSK in a predefined MCS information set. In an information subset whose modulation mode is the BPSK, corresponding transmission efficiency includes one or more of 0.1250, 0.2500, 0.3333, 0.3750, 0.5000, 0.6250, 1.0000, or the like. Alternatively, because the modulation order of the BPSK is 1, the corresponding coding rate includes one or more of 1/8, 1/4, 1/3, 3/8, 1/2, 5/8, 1, or the like.

Example 2: There are one or more information subsets whose modulation modes are the QPSK in a predefined MCS information set. In an information subset whose modulation mode is the QPSK, corresponding transmission efficiency includes one or more of 0.2500, 0.5000, 0.6667, 0.7500, 1.0000, 1.2500, 1.3333, 1.5000, 1.6667, 1.7500, 2.0000, or the like. Alternatively, because the modulation order of the QPSK is 2, the corresponding coding rate includes one or more of 1/8, 1/4, 1/3, 3/8, 1/2, 5/8, 2/3, 3/4, 5/6, 7/8, 1, or the like.

Example 3: There are one or more information subsets whose modulation modes are the 8PSK in a predefined MCS information set. In an information subset whose modulation mode is the 8PSK, corresponding transmission efficiency includes one or more of 1.8750, 2.0000, 2.2500, 2.5000, 2.6250, 3.0000, or the like. Alternatively, because the modulation order of the 8PSK is 3, the corresponding coding rate includes one or more of 5/8, 2/3, 3/4, 5/6, 7/8, 1, or the like.

In any one of Example 1 to Example 3, the provided coding rate is a common fraction. A value of the fraction is relatively fixed, which facilitates calculation, packet splitting, and the like during coding. This reduces, when the coding rate is represented by using a decimal, transmission errors caused by different precisions obtained by different devices or in different calculation manners, and improves a possibility of correct data transmission.

For example, the following describes 16 implementations of information subsets included in an information set.

Implementation 1: The predefined information set includes at least one information subset as follows: {MCS index: a0, modulation scheme: BPSK, transmission efficiency: 0.3750, coding rate: 3/8}.

Herein, a0 is an MCS index, and is used as an example of an index of the information subset. It should be understood that, in the examples and implementations of this embodiment of this application, an index is described as an example. In different scenarios, indexes may be different. For example, the index may be a number, for example, 0, 1, 2, or 3. For another example, the index may be a letter, for example, a, b, c, or d. For another example, the index may be a predefined identifier, a variable, or the like.

The foregoing coding rate may be replaced with other coding rate indication information, for example, coding rate x 1024. To be specific, the predefined information set includes at least one information subset as follows: {MCS index: a0, modulation scheme: BPSK, coding rate x 1024: 384, transmission efficiency: 0.3750}.

Implementation 2: The predefined information set includes at least two information subsets as follows:

{MCS index: a0, modulation scheme: BPSK, transmission efficiency: 0.2500, coding rate: 1/4}; and
{MCS index: a1, modulation scheme: BPSK, transmission efficiency: 0.3750, coding rate: 3/8}.

Herein, a0 and a2 are used as examples of indexes of the information subsets.

The foregoing coding rate may be replaced with other coding rate indication information, for example, coding rate x 1024. That is, the predefined information set includes at least two information subsets as follows:

{MCS index: a0, modulation scheme: BPSK, coding rate x 1024: 256, transmission efficiency: 0.2500}; and
{MCS index: a1, modulation scheme: BPSK, coding rate x 1024: 384, transmission efficiency: 0.3750}.

Implementation 3: The predefined information set includes at least four information subsets as follows:

{MCS index: b0, modulation scheme: QPSK, transmission efficiency: 1.0000, coding rate: 1/2},
{MCS index: b1, modulation scheme: QPSK, transmission efficiency: 1.2500, coding rate: 5/8},
{MCS index: b2, modulation scheme: QPSK, transmission efficiency: 1.5000, coding rate: 3/4}, and
{MCS index: b3, modulation scheme: QPSK, transmission efficiency: 1.7500, coding rate: 7/8}.

Herein, b0, b1, b2, and b3 are used as examples of indexes of the information subsets.

Alternatively, the predefined information set includes at least four information subsets as follows:

{MCS index: b0, modulation scheme: QPSK, coding rate x 1024: 512, transmission efficiency: 1.0000},
{MCS index: b1, modulation scheme: QPSK, coding rate x 1024: 640, transmission efficiency: 1.2500},
{MCS index: b2, modulation scheme: QPSK, coding rate x 1024: 768, transmission efficiency: 1.5000}, and

{MCS index: b3, modulation scheme: QPSK, coding rate x 1024: 896, transmission efficiency: 1.7500}.

Implementation 4: The predefined information set includes at least five information subsets as follows:

{MCS index: b0, modulation scheme: QPSK, transmission efficiency: 0.7500, coding rate: 3/8},
{MCS index: b1, modulation scheme: QPSK, transmission efficiency: 1.0000, coding rate: 1/2},
{MCS index: b2, modulation scheme: QPSK, transmission efficiency: 1.2500, coding rate: 5/8},
{MCS index: b3, modulation scheme: QPSK, transmission efficiency: 1.5000, coding rate: 3/4}, and
{MCS index: b4, modulation scheme: QPSK, transmission efficiency: 1.7500, coding rate: 7/8}.

Herein, b0, b1, b2, b3, and b4 are used as examples of indexes of the information subsets.
Alternatively, the predefined information set includes at least five information subsets as follows:

{MCS index: b0, modulation scheme: QPSK, coding rate x 1024: 384, transmission efficiency: 0.7500},
{MCS index: b1, modulation scheme: QPSK, coding rate x 1024: 512, transmission efficiency: 1.0000},
{MCS index: b2, modulation scheme: QPSK, coding rate x 1024: 640, transmission efficiency: 1.2500},
{MCS index: b3, modulation scheme: QPSK, coding rate x 1024: 768, transmission efficiency: 1.5000}, and
{MCS index: b4, modulation scheme: QPSK, coding rate x 1024: 896, transmission efficiency: 1.7500}.

Implementation 5: The predefined information set includes at least six information subsets as follows:

{MCS index: b0, modulation scheme: QPSK, transmission efficiency: 0.5000, coding rate: 1/4},
{MCS index: b1, modulation scheme: QPSK, transmission efficiency: 0.7500, coding rate: 3/8},
{MCS index: b2, modulation scheme: QPSK, transmission efficiency: 1.0000, coding rate: 1/2},
{MCS index: b3, modulation scheme: QPSK, transmission efficiency: 1.2500, coding rate: 5/8},
{MCS index: b4, modulation scheme: QPSK, transmission efficiency: 1.5000, coding rate: 3/4}, and
{MCS index: b5, modulation scheme: QPSK, transmission efficiency: 1.7500, coding rate: 7/8}.

Herein, b0, b 1, b2, b3, b4 and b5 are used as examples of indexes of the information subsets.
Alternatively, the predefined information set includes at least six information subsets as follows:

{MCS index: b0, modulation scheme: QPSK, coding rate x 1024: 256, transmission efficiency: 0.5000},
{MCS index: b1, modulation scheme: QPSK, coding rate x 1024: 384, transmission efficiency: 0.7500},
{MCS index: b2, modulation scheme: QPSK, coding rate x 1024: 512, transmission efficiency: 1.0000},
{MCS index: b3, modulation scheme: QPSK, coding rate x 1024: 640, transmission efficiency: 1.2500},
{MCS index: b4, modulation scheme: QPSK, coding rate x 1024: 768, transmission efficiency: 1.5000}, and
{MCS index: b5, modulation scheme: QPSK, coding rate x 1024: 896, transmission efficiency: 1.7500}.

Implementation 6: The predefined information set includes at least four information subsets as follows:

{MCS index: c0, modulation scheme: 8PSK, transmission efficiency: 1.8750, coding rate: 5/8},
{MCS index: c1, modulation scheme: 8PSK, transmission efficiency: 2.2500, coding rate: 3/4},
{MCS index: c2, modulation scheme: 8PSK, transmission efficiency: 2.6250, coding rate: 7/8}, and
{MCS index: c3, modulation scheme: 8PSK, transmission efficiency: 3.0000, coding rate: 1}.

Herein, c0, c1, c2, and c3 are used as examples of indexes of the information subsets.
Alternatively, the predefined information set includes at least four information subsets as follows:

{MCS index: c0, modulation mode: 8PSK, coding rate x 1024: 640, transmission efficiency: 1.8750},
{MCS index: c1, modulation mode: 8PSK, coding rate x 1024: 768, transmission efficiency: 2.2500},
{MCS index: c2, modulation mode: 8PSK, coding rate x 1024: 896, transmission efficiency: 2.6250}, and
{MCS index: c3, modulation mode: 8PSK, coding rate x 1024: 1024, transmission efficiency: 3.0000}.

Implementation 7: The predefined information set includes at least three information subsets as follows:

{MCS index: a0, modulation scheme: BPSK, transmission efficiency: 0.3750, coding rate: 3/8},
{MCS index: a1, modulation scheme: BPSK, transmission efficiency: 0.5000, coding rate: 1/2}, and
{MCS index: a2, modulation scheme: BPSK, transmission efficiency: 1.0000, coding rate: 1}.

Herein, a0, a1, and a2 are used as examples of indexes of the information subsets.

Alternatively, the predefined information set includes at least three information subsets as follows:

{MCS index: a0, modulation scheme: BPSK, coding rate x 1024: 384, transmission efficiency: 0.3750},
{MCS index: a1, modulation scheme: BPSK, coding rate x 1024: 512, transmission efficiency: 0.5000}, and
{MCS index: a2, modulation scheme: BPSK, coding rate x 1024: 1024, transmission efficiency: 1.0000}.

Implementation 8: The predefined information set includes at least six information subsets as follows:

{MCS index: b0, modulation scheme: QPSK, transmission efficiency: 0.7500, coding rate: 3/8},
{MCS index: b1, modulation scheme: QPSK, transmission efficiency: 1.0000, coding rate: 1/2},
{MCS index: b2, modulation scheme: QPSK, transmission efficiency: 1.2500, coding rate: 5/8},
{MCS index: b3, modulation scheme: QPSK, transmission efficiency: 1.5000, coding rate: 3/4},
{MCS index: b4, modulation scheme: QPSK, transmission efficiency: 1.7500, coding rate: 7/8}, and
{MCS index: b5, modulation scheme: QPSK, transmission efficiency: 2.0000, coding rate: 1}.

Herein, b0, b 1, b2, b3, b4 and b5 are used as examples of indexes of the information subsets.

Alternatively, the predefined information set includes at least six information subsets as follows:

{MCS index: b0, modulation scheme: QPSK, coding rate x 1024: 384, transmission efficiency: 0.7500},
{MCS index: b1, modulation scheme: QPSK, coding rate x 1024: 512, transmission efficiency: 1.0000},
{MCS index: b2, modulation scheme: QPSK, coding rate x 1024: 640, transmission efficiency: 1.2500},
{MCS index: b3, modulation scheme: QPSK, coding rate x 1024: 768, transmission efficiency: 1.5000},
{MCS index: b4, modulation scheme: QPSK, coding rate x 1024: 896, transmission efficiency: 1.7500}, and
{MCS index: b5, modulation scheme: QPSK, coding rate x 1024: 1024, transmission efficiency: 2.0000}.

Implementation 9: The predefined information set includes at least three information subsets as follows:

{MCS index: a0, modulation scheme: BPSK, transmission efficiency: 0.2500, coding rate: 1/4},
{MCS index: a1, modulation scheme: BPSK, transmission efficiency: 0.3750, coding rate: 3/8}, and
{MCS index: a2, modulation scheme: BPSK, transmission efficiency: 1.0000, coding rate: 1}.

Herein, a0, a1, and a2 are used as examples of indexes of the information subsets.

Alternatively, the predefined information set includes at least three information subsets as follows:

{MCS index: a0, modulation scheme: BPSK, coding rate x 1024: 256, transmission efficiency: 0.2500},
{MCS index: a1, modulation scheme: BPSK, coding rate x 1024: 384, transmission efficiency: 0.3750}, and
{MCS index: a2, modulation scheme: BPSK, coding rate x 1024: 1024, transmission efficiency: 1.0000}.

Implementation 10: The predefined information set includes at least seven information subsets as follows:

{MCS index: b0, modulation scheme: QPSK, transmission efficiency: 0.5000, coding rate: 1/4},
{MCS index: b1, modulation scheme: QPSK, transmission efficiency: 0.7500, coding rate: 3/8},
{MCS index: b2, modulation scheme: QPSK, transmission efficiency: 1.0000, coding rate: 1/2},
{MCS index: b3, modulation scheme: QPSK, transmission efficiency: 1.2500, coding rate: 5/8},
{MCS index: b4, modulation scheme: QPSK, transmission efficiency: 1.5000, coding rate: 3/4},
{MCS index: b5, modulation scheme: QPSK, transmission efficiency: 1.7500, coding rate: 7/8}, and
{MCS index: b6, modulation scheme: QPSK, transmission efficiency: 2.0000, coding rate: 1}.

Herein, b0, b1, b2, b3, b4, b5, and b5 are used as examples of indexes of the information subsets.

Alternatively, the predefined information set includes at least seven information subsets as follows:

{MCS index: b0, modulation scheme: QPSK, coding rate x 1024: 256, transmission efficiency: 0.5000},
{MCS index: b1, modulation scheme: QPSK, coding rate x 1024: 384, transmission efficiency: 0.7500},
{MCS index: b2, modulation scheme: QPSK, coding rate x 1024: 512, transmission efficiency: 1.0000},
{MCS index: b3, modulation scheme: QPSK, coding rate x 1024: 640, transmission efficiency: 1.2500},
{MCS index: b4, modulation scheme: QPSK, coding rate x 1024: 768, transmission efficiency: 1.5000},
{MCS index: b5, modulation scheme: QPSK, coding rate x 1024: 896, transmission efficiency: 1.7500}, and

{MCS index: b6, modulation scheme: QPSK, coding rate x 1024: 1024, transmission efficiency: 2.0000}.

Implementation 11: The predefined information set includes at least four information subsets as follows:

{MCS index: a0, modulation scheme: BPSK, transmission efficiency: 0.2500, coding rate: 1/4},
{MCS index: a1, modulation scheme: BPSK, transmission efficiency: 0.3750, coding rate: 3/8},
{MCS index: a2, modulation scheme: BPSK, transmission efficiency: 0.5000, coding rate: 1/2}, and
{MCS index: a3, modulation scheme: BPSK, transmission efficiency: 1.0000, coding rate: 1}.

Herein, a0, a1, a2, and a3 are used as examples of indexes of the information subsets.
Alternatively, the predefined information set includes at least four information subsets as follows:

{MCS index: a0, modulation scheme: BPSK, coding rate x 1024: 256, transmission efficiency: 0.2500},
{MCS index: a1, modulation scheme: BPSK, coding rate x 1024: 384, transmission efficiency: 0.3750},
{MCS index: a2, modulation scheme: BPSK, coding rate x 1024: 512, transmission efficiency: 0.5000}, and
{MCS index: a3, modulation scheme: BPSK, coding rate x 1024: 1024, transmission efficiency: 1.0000}.

Implementation 12: The predefined information set includes at least five information subsets as follows:

{MCS index: a0, modulation scheme: BPSK, transmission efficiency: 0.2500, coding rate: 1/4},
{MCS index: a1, modulation scheme: BPSK, transmission efficiency: 0.3750, coding rate: 3/8},
{MCS index: a2, modulation scheme: BPSK, transmission efficiency: 0.5000, coding rate: 1/2},
{MCS index: a3, modulation scheme: BPSK, transmission efficiency: 0.6250, coding rate: 5/8}, and
{MCS index: a4, modulation scheme: BPSK, transmission efficiency: 1.0000, coding rate: 1}.

Herein, a0, a1, a2, a3, and a4 are used as examples of indexes of the information subsets.
Alternatively, the predefined information set includes at least five information subsets as follows:

{MCS index: a0, modulation scheme: BPSK, coding rate x 1024: 256, transmission efficiency: 0.2500},
{MCS index: a1, modulation scheme: BPSK, coding rate x 1024: 384, transmission efficiency: 0.3750},
{MCS index: a2, modulation scheme: BPSK, coding rate x 1024: 512, transmission efficiency: 0.5000},
{MCS index: a3, modulation scheme: BPSK, coding rate x 1024: 640, transmission efficiency: 0.6250}, and
{MCS index: a4, modulation scheme: BPSK, coding rate x 1024: 1024, transmission efficiency: 1.0000}.

Implementation 13: The predefined information set includes at least five information subsets as follows:

{MCS index: b0, modulation scheme: QPSK, transmission efficiency: 1.0000, coding rate: 1/2},
{MCS index: b1, modulation scheme: QPSK, transmission efficiency: 1.2500, coding rate: 5/8},
{MCS index: b2, modulation scheme: QPSK, transmission efficiency: 1.5000, coding rate: 3/4},
{MCS index: b3, modulation scheme: QPSK, transmission efficiency: 1.7500, coding rate: 7/8}, and
{MCS index: b4, modulation scheme: QPSK, transmission efficiency: 2.0000, coding rate: 1}.

Herein, b0, b1, b2, b3, and b4 are used as examples of indexes of the information subsets.
Alternatively, the predefined information set includes at least five information subsets as follows:

{MCS index: b0, modulation scheme: QPSK, coding rate x 1024: 512, transmission efficiency: 1.0000},
{MCS index: b1, modulation scheme: QPSK, coding rate x 1024: 640, transmission efficiency: 1.2500},
{MCS index: b2, modulation scheme: QPSK, coding rate x 1024: 768, transmission efficiency: 1.5000},
{MCS index: b3, modulation scheme: QPSK, coding rate x 1024: 896, transmission efficiency: 1.7500}, and
{MCS index: b4, modulation scheme: QPSK, coding rate x 1024: 1024, transmission efficiency: 2.0000}.

Implementation 14: The predefined information set includes at least three information subsets as follows:

{MCS index: a0, modulation scheme: BPSK, transmission efficiency: 0.2500, coding rate: 1/4},
{MCS index: a1, modulation scheme: BPSK, transmission efficiency: 0.3333, coding rate: 1/3}, and
{MCS index: a2, modulation scheme: BPSK, transmission efficiency: 1.0000, coding rate: 1}.

Herein, a0, a1, and a2 are used as examples of indexes of the information subsets.

Alternatively, the predefined information set includes at least three information subsets as follows:

{MCS index: a0, modulation scheme: BPSK, coding rate x 1024: 256, transmission efficiency: 0.2500},
{MCS index: a1, modulation scheme: BPSK, coding rate x 1024: 341, transmission efficiency: 0.3333}, and
{MCS index: a2, modulation scheme: BPSK, coding rate x 1024: 1024, transmission efficiency: 1.0000}.

Implementation 15: The predefined information set includes at least seven information subsets as follows:

{MCS index: b0, modulation scheme: QPSK, transmission efficiency: 0.5000, coding rate: 1/4},
{MCS index: b1, modulation scheme: QPSK, transmission efficiency: 0.6667, coding rate: 1/3},
{MCS index: b2, modulation scheme: QPSK, transmission efficiency: 1.0000, coding rate: 1/2},
{MCS index: b3, modulation scheme: QPSK, transmission efficiency: 1.3333, coding rate: 2/3},
{MCS index: b4, modulation scheme: QPSK, transmission efficiency: 1.5000, coding rate: 3/4},
{MCS index: b5, modulation scheme: QPSK, transmission efficiency: 1.6667, coding rate: 5/6}, and
{MCS index: b6, modulation scheme: QPSK, transmission efficiency: 2.0000, coding rate: 1}.

Herein, b0, b1, b2, b3, b4, b5, and b6 are used as examples of indexes of the information subsets.
Alternatively, the predefined information set includes at least seven information subsets as follows:

{MCS index: b0, modulation scheme: QPSK, coding rate x 1024: 256, transmission efficiency: 0.5000},
{MCS index: b1, modulation scheme: QPSK, coding rate x 1024: 341, transmission efficiency: 0.6667},
{MCS index: b2, modulation scheme: QPSK, coding rate x 1024: 512, transmission efficiency: 1.0000},
{MCS index: b3, modulation scheme: QPSK, coding rate x 1024: 683, transmission efficiency: 1.3333},
{MCS index: b4, modulation scheme: QPSK, coding rate x 1024: 768, transmission efficiency: 1.5000},
{MCS index: b5, modulation scheme: QPSK, coding rate x 1024: 853, transmission efficiency: 1.6667}, and
{MCS index: b6, modulation scheme: QPSK, coding rate x 1024: 1024, transmission efficiency: 2.0000}.

Implementation 16: The predefined information set includes at least four information subsets as follows:

{MCS index: c0, modulation scheme: 8PSK, transmission efficiency: 2.0000, coding rate: 2/3},
{MCS index: c1, modulation scheme: 8PSK, transmission efficiency: 2.2500, coding rate: 3/4},
{MCS index: c2, modulation scheme: 8PSK, transmission efficiency: 2.5000, coding rate: 5/6}, and
{MCS index: c3, modulation scheme: 8PSK, transmission efficiency: 3.0000, coding rate: 1}.

Herein, c0, c1, c2, and c3 are used as examples of indexes of the information subsets.
Alternatively, the predefined information set includes at least four information subsets as follows:

{MCS index: c0, modulation mode: 8PSK, coding rate x 1024: 683, transmission efficiency: 2.0000},
{MCS index: c1, modulation mode: 8PSK, coding rate x 1024: 768, transmission efficiency: 2.2500},
{MCS index: c2, modulation mode: 8PSK, coding rate x 1024: 853, transmission efficiency: 2.5000}, and
{MCS index: c3, modulation mode: 8PSK, coding rate x 1024: 1024, transmission efficiency: 3.0000}.

In any one of Implementation 1 to Implementation 16, multiple-order coding rates are designed in a same modulation mode. This improves flexibility of selecting a modulation and coding mode. A coding rate corresponding to coding rate indication information is a common fraction, and corresponding coding rates change evenly in a plurality of information subsets in which modulation schemes are the same. According to the solutions provided in embodiments of this application, a jump of a data throughput can be avoided, communication stability can be enhanced, and a throughput can be improved.
Optionally, the plurality of the foregoing implementations may be combined with each other. The following lists 11 possible solutions:
Solution 1: The predefined MCS information set includes the information subsets in Implementation 2, Implementation 5, and Implementation 6.
For example, the MCS information set may be implemented in a form of a table. Table 7 shows a schematic table of a possible MCS information set according to an embodiment of this application. An MCS table shown in Table 7 includes 11 MCS information subsets, and one MCS information subset corresponds to one modulation and coding scheme. Specifically, the MCS table may include a modulation and coding index (MCS index), a modulation (modulation) mode, a coding rate (rate, R), and transmission efficiency (Efficiency).

**Table 7 A plurality of information subsets in the MCS information set**

| MCS table | | | |
|---|---|---|---|
| Modulation and coding index | Modulation scheme | Coding rate (R) x 1024 | Transmission efficiency |
| 0 | BPSK | 256 | 0.2500 |
| 1 | BPSK | 384 | 0.3750 |
| 2 | QPSK | 256 | 0.5000 |
| 3 | QPSK | 384 | 0.7500 |
| 4 | QPSK | 512 | 1.0000 |
| 5 | QPSK | 640 | 1.2500 |
| 6 | QPSK | 768 | 1.5000 |
| 7 | QPSK | 896 | 1.7500 |
| 8 | 8PSK | 640 | 1.8750 |
| 9 | 8PSK | 768 | 2.2500 |
| 10 | 8PSK | 896 | 2.6250 |
| 11 | 8PSK | 1024 | 3.0000 |

As shown in Table 7, transmission efficiency in information subsets whose modulation schemes are the QPSK separately is {0.5000, 0.7500, 1.0000, 1.2500, 1.5000, 1.7500}. There is a correspondence among a coding rate, a modulation order, and transmission efficiency (Coding rate = Transmission efficiency/Modulation order). Because the modulation order of the QPSK is 2, it can be learned that coding rates corresponding to the information subsets whose modulation schemes are QPSK separately are {1/4, 3/8, 1/2, 5/8, 3/4, 7/8} in ascending order. The coding rates change evenly in ascending order, or a difference between two adjacent items is 1/8. Certainly, the same applies to a case of a descending order.

Correspondingly, for information subsets whose modulation schemes are the 8PSK, corresponding coding rates are arranged in ascending order as follows: {5/8, 3/4, 7/8, 1}, and the coding rates still change evenly in ascending order.

In a communication system, if a performance difference between modulation and coding schemes is relatively large, only a same modulation and coding scheme can be selected under different channel quality, and it is difficult to meet a user requirement.

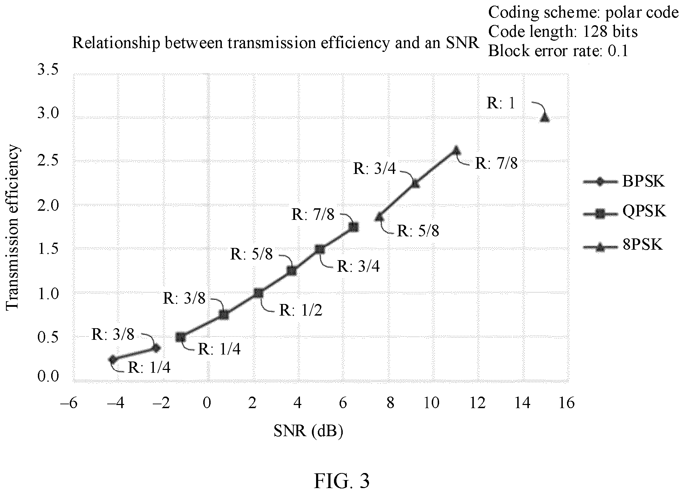

Specifically, refer to FIG. 3. FIG. 3 is a schematic diagram of performance of a modulation and coding mode according to an embodiment of this application. A transmission condition is as follows: A channel is an additive white Gaussian noise (Additive White Gaussian Noise, AWGN) channel, a coding scheme is coding by using a polar (polar) code with a code length of 128 bits (that is, a length of a data block obtained through coding is 128 bits), and a target block error rate (block error rate, BLER) is 0.1. Under the foregoing condition, transmission information is coded and modulated by using the MCS table shown in Table 7, to obtain the schematic diagram of a relationship between transmission efficiency and a signal-to-noise ratio (signal-to-noise ratio, SNR, or referred to as S/N) shown in FIG. 3. The relatively large performance difference between different modulation schemes is reflected in the SNR and the BLER, indicating: a relatively large difference between signal-to-noise ratios required when a target block error rate is reached.

For example, as shown in FIG. 3, in a modulation and coding mode in which a modulation mode is BPSK and a coding rate (R) is 3/8, coding is performed based on a polar code with a code length of 128, and if a block error rate of 0.1 is reached, a signal-to-noise ratio needs to be about -2. In a modulation and coding scheme in which a modulation mode is QPSK and a coding rate (R) is 5/8, coding is performed based on a polar code with a code length of 128, and if a block error rate of 0.1 is reached, a signal-to-noise ratio needs to be about 4. If only the two MCS modulation schemes are available, a block error rate may increase when an SNR is less than -2. However, in a signal-to-noise ratio between -2 and 4, to meet a requirement of a block error rate, only the former (the modulation mode is the BPSK, and the coding rate is 3/8) can be selected, and corresponding transmission efficiency can only reach 0.3750. Consequently, a system throughput is relatively low.

In Solution 1, the plurality of modulation modes are provided for selection, and the same modulation scheme may include a plurality of coding rates, thereby improving flexibility of selecting a modulation and coding scheme and enhancing communication stability. Further, the coding rates in the same modulation mode change evenly, so that a performance difference between modulation and coding schemes is relatively small, and the difference is relatively even, so that an appropriate modulation and coding scheme can be selected under different channel quality, relatively proper transmission efficiency is obtained, and a throughput is improved.

Refer to FIG. 3. In this embodiment of this application, when a signal-to-noise ratio is about -2, a modulation and coding scheme whose MCS index is 1 (a modulation mode is the BPSK, and R is 3/8) may be used, where transmission efficiency is 0.3750. When a signal-to-noise ratio is about -1, a modulation and coding scheme whose MCS index is 0 (a modulation mode is the QPSK, and R is 1/4) may be used, where transmission efficiency is 0.5000. When a signal-to-noise ratio is about 1, a modulation and coding scheme whose MCS index is 2 (a modulation and coding scheme is the QPSK, and R is 3/8) may be selected, where transmission efficiency is 0.7500. Other cases are deduced by analogy. It can be learned that, in different signal-to-noise ratio ranges, a proper modulation and coding scheme can be selected, thereby improving transmission efficiency and improving a throughput.

Further, in the foregoing modulation and coding scheme, for a corresponding coding rate, a denominator is usually an even number such as 2, 4, or 8, and the corresponding coding rate may adapt to a word length (8 bits, 16 bits, or the like), a byte length (usually 8 bits), or the like of a computer. This avoids a case in which an encoded data packet needs to be segmented, and improves transmission efficiency.

It should be understood that, in the plurality of information subsets of the information set shown in Table 7, the coding rate indication information may alternatively be represented as a coding rate, as shown in Table 8.

**Table 8 A plurality of information subsets in the MCS information set**

| MCS table | | | |
|---|---|---|---|
| Modulation and coding index | Modulation scheme | Transmission efficiency | Coding rate (R) |
| 0 | BPSK | 0.2500 | 1/4 |
| 1 | BPSK | 0.3750 | 3/8 |
| 2 | QPSK | 0.5000 | 1/4 |
| 3 | QPSK | 0.7500 | 3/8 |
| 4 | QPSK | 1.0000 | 1/2 |
| 5 | QPSK | 1.2500 | 5/8 |
| 6 | QPSK | 1.5000 | 3/4 |
| 7 | QPSK | 1.7500 | 7/8 |
| 8 | 8PSK | 1.8750 | 5/8 |
| 9 | 8PSK | 2.2500 | 3/4 |
| 10 | 8PSK | 2.6250 | 7/8 |
| 11 | 8PSK | 3.0000 | 1 |

It should be noted that the MCS table shown in Table 7, Table 8, or the like is merely an example of a form of implementing the MCS information set. The MCS information set may alternatively be implemented in any one of forms shown in Implementation 1 to Implementation 16, or may be implemented in a form of a plurality of subtables. It should be understood that, as shown in Table 7, Table 8, and the following information sets, an arrangement order and indexes of a plurality of information subsets are merely examples. An arrangement order of information subsets and a value of a modulation and coding index are not limited in this application. In addition, the foregoing schematic diagram of performance shown in FIG. 3 is merely an example. When a coding scheme is under another channel condition, a relational diagram may be different. However, the plurality of modulation and coding schemes provided in this embodiment of this application are still applicable.

Solution 2: The predefined MCS information set includes the information subsets in Implementation 2, Implementation 4, and Implementation 6.

For example, the MCS information set may be implemented in a form of a table. Table 9 shows a schematic table of another possible MCS information set according to an embodiment of this application. As shown in Table 9, coding rates corresponding to information subsets whose modulation schemes are the QPSK are arranged in ascending order as follows: {3/8, 1/2, 5/8, 3/4, 7/8}. A difference between two adjacent coding rates is 1/8. Coding rates corresponding to information subsets whose modulation schemes are the 8PSK are arranged in ascending order as follows: {5/8, 3/4, 7/8, 1}, and the coding rates change evenly in ascending order.

**Table 9 A plurality of information subsets in the MCS information set**

| MCS table | | | |
|---|---|---|---|
| Modulation and coding index | Modulation scheme | Coding rate (R) x 1024 | Transmission efficiency |
| 0 | BPSK | 256 | 0.2500 |
| 1 | BPSK | 384 | 0.3750 |
| 2 | QPSK | 384 | 0.7500 |
| 3 | QPSK | 512 | 1.0000 |
| 4 | QPSK | 640 | 1.2500 |
| 5 | QPSK | 768 | 1.5000 |
| 6 | QPSK | 896 | 1.7500 |
| 7 | 8PSK | 640 | 1.8750 |
| 8 | 8PSK | 768 | 2.2500 |
| 9 | 8PSK | 896 | 2.6250 |
| 10 | 8PSK | 1024 | 3.0000 |

It should be understood that, in the plurality of information subsets of the information set shown in Table 9, the coding rate indication information may alternatively be represented as a coding rate, as shown in Table 10.

**Table 10 A plurality of information subsets in the MCS information set**

| MCS table | | | |
|---|---|---|---|
| Modulation and coding index | Modulation scheme | Transmission efficiency | Coding rate (R) |
| 0 | BPSK | 0.2500 | 1/4 |
| 1 | BPSK | 0.3750 | 3/8 |
| 2 | QPSK | 0.7500 | 3/8 |
| 3 | QPSK | 1.0000 | 1/2 |
| 4 | QPSK | 1.2500 | 5/8 |
| 5 | QPSK | 1.5000 | 3/4 |
| 6 | QPSK | 1.7500 | 7/8 |
| 7 | 8PSK | 1.8750 | 5/8 |
| 8 | 8PSK | 2.2500 | 3/4 |
| 9 | 8PSK | 2.6250 | 7/8 |
| 10 | 8PSK | 3.0000 | 1 |

Solution 3: The predefined MCS information set includes the information subsets in Implementation 2, Implementation 3, and Implementation 6.

For example, the MCS information set may be implemented in a form of a table. Table 11 shows a schematic table of another possible MCS information set according to an embodiment of this application. As shown in Table 9, coding rates corresponding to information subsets whose modulation schemes are the QPSK are arranged in ascending order as follows: {1/2, 5/8, 5/8, 3/4, 7/8, 1}. A difference between two adjacent coding rates is 1/8. Coding rates corresponding to information subsets whose modulation schemes are the 8PSK are arranged in ascending order as follows: {5/8, 3/4, 7/8, 1}, and the coding rates change evenly in ascending order.

**Table 11 A plurality of information subsets in the MCS information set**

| MCS table | | | |
|---|---|---|---|
| Modulation and coding index | Modulation scheme | Coding rate (R) x 1024 | Transmission efficiency |
| 0 | BPSK | 256 | 0.2500 |
| 1 | BPSK | 384 | 0.3750 |
| 2 | QPSK | 512 | 1.0000 |
| 3 | QPSK | 640 | 1.2500 |
| 4 | QPSK | 768 | 1.5000 |
| 5 | QPSK | 896 | 1.7500 |
| 6 | 8PSK | 640 | 1.8750 |
| 7 | 8PSK | 768 | 2.2500 |
| 8 | 8PSK | 896 | 2.6250 |
| 9 | 8PSK | 1024 | 3.0000 |

It should be understood that, in the plurality of information subsets of the information set shown in Table 11, the coding rate indication information may alternatively be represented as a coding rate, as shown in Table 12.

**Table 12 A plurality of information subsets in the MCS information set**

| MCS table | | | |
|---|---|---|---|
| Modulation and coding index | Modulation scheme | Transmission efficiency | Coding rate (R) |
| 0 | BPSK | 0.2500 | 1/4 |
| 1 | BPSK | 0.3750 | 3/8 |
| 2 | QPSK | 1.0000 | 1/2 |
| 3 | QPSK | 1.2500 | 5/8 |
| 4 | QPSK | 1.5000 | 3/4 |
| 5 | QPSK | 1.7500 | 7/8 |
| 6 | 8PSK | 1.8750 | 5/8 |
| 7 | 8PSK | 2.2500 | 3/4 |
| 8 | 8PSK | 2.6250 | 7/8 |
| 9 | 8PSK | 3.0000 | 1 |

Solution 4: The predefined MCS information set includes the information subsets in Implementation 1, Implementation 5, and Implementation 6.

For example, the MCS information set may be implemented in a form of a table. Table 13 is a schematic table of another possible MCS information set according to an embodiment of this application. As shown in Table 13, coding rates corresponding to information subsets whose modulation schemes are the QPSK are arranged in ascending order as follows: {1/4, 3/8, 1/2, 5/8, 5/8, 3/4, 7/8, 1}. A difference between two adjacent coding rates is 1/8. Coding rates corresponding to information subsets whose modulation schemes are the 8PSK are arranged in ascending order as follows: {5/8, 3/4, 7/8, 1}, and the coding rates change evenly in ascending order.

**Table 13 A plurality of information subsets in the MCS information set**

| MCS table | | | |
|---|---|---|---|
| Modulation and coding index | Modulation scheme | Coding rate (R) x 1024 | Transmission efficiency |
| 0 | BPSK | 384 | 0.3750 |

(continued)

| MCS table | | | |
| --- | --- | --- | --- |
| Modulation and coding index | Modulation scheme | Coding rate (R) x 1024 | Transmission efficiency |
| 1 | QPSK | 256 | 0.5000 |
| 2 | QPSK | 384 | 0.7500 |
| 3 | QPSK | 512 | 1.0000 |
| 4 | QPSK | 640 | 1.2500 |
| 5 | QPSK | 768 | 1.5000 |
| 6 | QPSK | 896 | 1.7500 |
| 7 | 8PSK | 640 | 1.8750 |
| 8 | 8PSK | 768 | 2.2500 |
| 9 | 8PSK | 896 | 2.6250 |
| 10 | 8PSK | 1024 | 3.0000 |

It should be understood that, in the plurality of information subsets of the information set shown in Table 13, the coding rate indication information may alternatively be represented as a coding rate, as shown in Table 14.

**Table 14 A plurality of information subsets in the MCS information set**

| MCS table | | | |
| --- | --- | --- | --- |
| Modulation and coding index | Modulation scheme | Transmission efficiency | Coding rate (R) |
| 0 | BPSK | 0.3750 | 3/8 |
| 1 | QPSK | 0.5000 | 1/4 |
| 2 | QPSK | 0.7500 | 3/8 |
| 3 | QPSK | 1.0000 | 1/2 |
| 4 | QPSK | 1.2500 | 5/8 |
| 5 | QPSK | 1.5000 | 3/4 |
| 6 | QPSK | 1.7500 | 7/8 |
| 7 | 8PSK | 1.8750 | 5/8 |
| 8 | 8PSK | 2.2500 | 3/4 |
| 9 | 8PSK | 2.6250 | 7/8 |
| 10 | 8PSK | 3.0000 | 1 |

Solution 5: The predefined MCS information set includes the information subsets in Implementation 1, Implementation 4, and Implementation 6.

For example, the MCS information set may be implemented in a form of a table. Table 15 is a schematic table of another possible MCS information set according to an embodiment of this application. As shown in Table 15, coding rates corresponding to information subsets whose modulation schemes are the QPSK are arranged in ascending order as follows: {3/8, 1/2, 5/8, 3/4, 7/8, 1}. A difference between two adjacent coding rates is 1/8. Coding rates corresponding to information subsets whose modulation schemes are the 8PSK are arranged in ascending order as follows: {5/8, 3/4, 7/8, 1}, and the coding rates change evenly in ascending order.

**Table 15 A plurality of information subsets in the MCS information set**

| MCS table | | | |
|---|---|---|---|
| Modulation and coding index | Modulation scheme | Coding rate (R) x 1024 | Transmission efficiency |
| 0 | BPSK | 384 | 0.3750 |
| 1 | QPSK | 384 | 0.7500 |
| 2 | QPSK | 512 | 1.0000 |
| 3 | QPSK | 640 | 1.2500 |
| 4 | QPSK | 768 | 1.5000 |
| 5 | QPSK | 896 | 1.7500 |
| 6 | 8PSK | 640 | 1.8750 |
| 7 | 8PSK | 768 | 2.2500 |
| 8 | 8PSK | 896 | 2.6250 |
| 9 | 8PSK | 1024 | 3.0000 |

It should be understood that, in the plurality of information subsets of the information set shown in Table 15, the coding rate indication information may alternatively be represented as a coding rate, as shown in Table 10.

**Table 16 A plurality of information subsets in the MCS information set**

| MCS table | | | |
|---|---|---|---|
| Modulation and coding index | Modulation scheme | Transmission efficiency | Coding rate (R) |
| 0 | BPSK | 0.3750 | 3/8 |
| 1 | QPSK | 0.7500 | 3/8 |
| 2 | QPSK | 1.0000 | 1/2 |
| 3 | QPSK | 1.2500 | 5/8 |
| 4 | QPSK | 1.5000 | 3/4 |
| 5 | QPSK | 1.7500 | 7/8 |
| 6 | 8PSK | 1.8750 | 5/8 |
| 7 | 8PSK | 2.2500 | 3/4 |
| 8 | 8PSK | 2.6250 | 7/8 |
| 9 | 8PSK | 3.0000 | 1 |

Solution 6: The predefined MCS information set includes the information subsets in Implementation 1, Implementation 3, and Implementation 6.

For example, the MCS information set may be implemented in a form of a table. Table 17 is a schematic table of another possible MCS information set according to an embodiment of this application. As shown in Table 17, coding rates corresponding to information subsets whose modulation schemes are the QPSK are arranged in ascending order as follows: {1/2, 5/8, 3/4, 7/8, 1}. A difference between two adjacent coding rates is 1/8. Coding rates corresponding to information subsets whose modulation schemes are the 8PSK are arranged in ascending order as follows: {5/8, 3/4, 7/8, 1}, and the coding rates change evenly in ascending order.

**Table 17 A plurality of information subsets in the MCS information set**

| MCS table | | | |
|---|---|---|---|
| Modulation and coding index | Modulation scheme | Coding rate (R) x 1024 | Transmission efficiency |
| 0 | BPSK | 384 | 0.3750 |

(continued)

| MCS table | | | |
|---|---|---|---|
| Modulation and coding index | Modulation scheme | Coding rate (R) x 1024 | Transmission efficiency |
| 1 | QPSK | 512 | 1.0000 |
| 2 | QPSK | 640 | 1.2500 |
| 3 | QPSK | 768 | 1.5000 |
| 4 | QPSK | 896 | 1.7500 |
| 5 | 8PSK | 640 | 1.8750 |
| 6 | 8PSK | 768 | 2.2500 |
| 7 | 8PSK | 896 | 2.6250 |
| 8 | 8PSK | 1024 | 3.0000 |

It should be understood that, in the plurality of information subsets of the information set shown in Table 17, the coding rate indication information may alternatively be represented as a coding rate, as shown in Table 18.

**Table 18 A plurality of information subsets in the MCS information set**

| MCS table | | | |
|---|---|---|---|
| Modulation and coding index | Modulation scheme | Transmission efficiency | Coding rate (R) |
| 0 | BPSK | 0.3750 | 3/8 |
| 1 | QPSK | 1.0000 | 1/2 |
| 2 | QPSK | 1.2500 | 5/8 |
| 3 | QPSK | 1.5000 | 3/4 |
| 4 | QPSK | 1.7500 | 7/8 |
| 5 | 8PSK | 1.8750 | 5/8 |
| 6 | 8PSK | 2.2500 | 3/4 |
| 7 | 8PSK | 2.6250 | 7/8 |
| 8 | 8PSK | 3.0000 | 1 |

Solution 7: The predefined MCS information set includes the information subsets in Implementation 7, Implementation 8, and Implementation 6.

For example, the MCS information set may be implemented in a form of a table. Table 19 is a schematic table of another possible MCS information set according to an embodiment of this application. As shown in Table 19, coding rates corresponding to information subsets whose modulation schemes are the BPSK are arranged in ascending order as follows: {3/8, 1/2, 1}. The coding rates are relatively even in ascending order. Coding rates corresponding to information subsets whose modulation schemes are the QPSK are arranged in ascending order as follows: {3/8, 1/2, 5/8, 3/4, 7/8, 1}. The coding rates change evenly in ascending order, or a difference between two adjacent items is 1/8. Coding rates corresponding to information subsets whose modulation schemes are the 8PSK are arranged in ascending order as follows: {5/8, 3/4, 7/8, 1}, and the coding rates change evenly in ascending order.

**Table 19 A plurality of information subsets in the MCS information set**

| MCS table | | | |
|---|---|---|---|
| Modulation and coding index | Modulation scheme | Coding rate (R) x 1024 | Transmission efficiency |
| 0 | BPSK | 384 | 0.3750 |
| 1 | BPSK | 512 | 0.5000 |
| 2 | BPSK | 1024 | 1.0000 |

(continued)

| MCS table | | | |
|---|---|---|---|
| Modulation and coding index | Modulation scheme | Coding rate (R) x 1024 | Transmission efficiency |
| 3 | QPSK | 384 | 0.7500 |
| 4 | QPSK | 512 | 1.0000 |
| 5 | QPSK | 640 | 1.2500 |
| 6 | QPSK | 768 | 1.5000 |
| 7 | QPSK | 896 | 1.7500 |
| 8 | QPSK | 1024 | 2.0000 |
| 9 | 8PSK | 640 | 1.8750 |
| 10 | 8PSK | 768 | 2.2500 |
| 11 | 8PSK | 896 | 2.6250 |
| 12 | 8PSK | 1024 | 3.0000 |

It should be understood that, in the plurality of information subsets of the information set shown in Table 19, the coding rate indication information may alternatively be represented as a coding rate, as shown in Table 20.

**Table 20 A plurality of information subsets in the MCS information set**

| MCS table | | | |
|---|---|---|---|
| Modulation and coding index | Modulation scheme | Transmission efficiency | Coding rate (R) |
| 0 | BPSK | 0.3750 | 3/8 |
| 1 | BPSK | 0.5000 | 1/2 |
| 2 | BPSK | 1.0000 | 1 |
| 3 | QPSK | 0.7500 | 3/8 |
| 4 | QPSK | 1.0000 | 1/2 |
| 5 | QPSK | 1.2500 | 5/8 |
| 6 | QPSK | 1.5000 | 3/4 |
| 7 | QPSK | 1.7500 | 7/8 |
| 8 | QPSK | 2.0000 | 1 |
| 9 | 8PSK | 1.8750 | 5/8 |
| 10 | 8PSK | 2.2500 | 3/4 |
| 11 | 8PSK | 2.6250 | 7/8 |
| 12 | 8PSK | 3.0000 | 1 |

Solution 8: The predefined MCS information set includes the information subsets in Implementation 9, Implementation 10, and Implementation 6.
For example, the MCS information set may be implemented in a form of a table. Table 21 is a schematic table of another possible MCS information set according to an embodiment of this application.
As shown in Table 21, coding rates corresponding to information subsets whose modulation schemes are the BPSK are arranged in ascending order as follows: {1/4, 3/8, 1}, and the coding rates change evenly in ascending order. Coding rates corresponding to information subsets whose modulation schemes are the QPSK are arranged in ascending order as follows: {1/4, 3/8, 1/2, 5/8, 3/4, 7/8, 1}. The coding rates change evenly in ascending order, or a difference between two adjacent items is 1/8. Coding rates corresponding to information subsets whose modulation schemes are the 8PSK are arranged in ascending order as follows: {5/8, 3/4, 7/8, 1}, and the coding rates change still evenly in ascending order.

**Table 21 A plurality of information subsets in the aspect information set**

| MCS table | | | |
|---|---|---|---|
| Modulation and coding index | Modulation scheme | Coding rate (R) x 1024 | Transmission efficiency |
| 0 | BPSK | 256 | 0.2500 |
| 1 | BPSK | 384 | 0.3750 |
| 2 | BPSK | 1024 | 1.0000 |
| 3 | QPSK | 256 | 0.5000 |
| 4 | QPSK | 384 | 0.7500 |
| 5 | QPSK | 512 | 1.0000 |
| 6 | QPSK | 640 | 1.2500 |
| 7 | QPSK | 768 | 1.5000 |
| 8 | QPSK | 896 | 1.7500 |
| 9 | QPSK | 1024 | 2.000 |
| 10 | 8PSK | 640 | 1.8750 |
| 11 | 8PSK | 768 | 2.2500 |
| 12 | 8PSK | 896 | 2.6250 |
| 13 | 8PSK | 1024 | 3.0000 |

It should be understood that, in the plurality of information subsets of the information set shown in Table 21, the coding rate indication information may alternatively be represented as a coding rate, as shown in Table 22.

**Table 22 A plurality of information subsets in the MCS information set**

| MCS table | | | |
|---|---|---|---|
| Modulation and coding index | Modulation scheme | Transmission efficiency | Coding rate (R) |
| 0 | BPSK | 0.2500 | 1/4 |
| 1 | BPSK | 0.3750 | 3/8 |
| 2 | BPSK | 1.0000 | 1 |
| 3 | QPSK | 0.5000 | 1/4 |
| 4 | QPSK | 0.7500 | 3/8 |
| 5 | QPSK | 1.0000 | 1/2 |
| 6 | QPSK | 1.2500 | 5/8 |
| 7 | QPSK | 1.5000 | 3/4 |
| 8 | QPSK | 1.7500 | 7/8 |
| 9 | QPSK | 2.0000 | 1 |
| 10 | 8PSK | 1.8750 | 5/8 |
| 11 | 8PSK | 2.2500 | 3/4 |
| 12 | 8PSK | 2.6250 | 7/8 |
| 13 | 8PSK | 3.0000 | 1 |

Solution 9: The predefined MCS information set includes the information subsets in Implementation 11, Implementation 8, and Implementation 6.

For example, the MCS information set may be implemented in a form of a table. Table 23 is a schematic table of another possible MCS information set according to an embodiment of this application.

As shown in Table 23, coding rates corresponding to information subsets whose modulation schemes are the BPSK are arranged in ascending order as follows: {1/4, 3/8, 1/2, 1}, and the coding rates change evenly in ascending order. Coding rates corresponding to information subsets whose modulation schemes are the QPSK are arranged in ascending order as follows: {3/8, 1/2, 5/8, 3/4, 7/8, 1}. The coding rates change evenly in ascending order, or a difference between two adjacent items is 1/8. Coding rates corresponding to information subsets whose modulation schemes are the 8PSK are arranged in ascending order as follows: {5/8, 3/4, 7/8, 1}, and the coding rates change still evenly in ascending order.

**Table 23 A plurality of information subsets in the MCS information set**

| MCS table | | | |
| --- | --- | --- | --- |
| Modulation and coding index | Modulation scheme | Coding rate (R) x 1024 | Transmission efficiency |
| 0 | BPSK | 256 | 0.2500 |
| 1 | BPSK | 384 | 0.3750 |
| 2 | BPSK | 512 | 0.5000 |
| 3 | BPSK | 1024 | 1.0000 |
| 4 | QPSK | 384 | 0.7500 |
| 5 | QPSK | 512 | 1.0000 |
| 6 | QPSK | 640 | 1.2500 |
| 7 | QPSK | 768 | 1.5000 |
| 8 | QPSK | 896 | 1.7500 |
| 9 | QPSK | 1024 | 2.0000 |
| 10 | 8PSK | 640 | 1.8750 |
| 11 | 8PSK | 768 | 2.2500 |
| 12 | 8PSK | 896 | 2.6250 |
| 13 | 8PSK | 1024 | 3.0000 |

It should be understood that, in the plurality of information subsets of the information set shown in Table 23, the coding rate indication information may alternatively be represented as a coding rate, as shown in Table 24.

**Table 24 A plurality of information subsets in the MCS information set**

| MCS table | | | |
| --- | --- | --- | --- |
| Modulation and coding index | Modulation scheme | Transmission efficiency | Coding rate (R) |
| 0 | BPSK | 0.2500 | 1/4 |
| 1 | BPSK | 0.3750 | 3/8 |
| 2 | BPSK | 0.5000 | 1/2 |
| 3 | BPSK | 1.0000 | 1 |
| 4 | QPSK | 0.7500 | 3/8 |
| 5 | QPSK | 1.0000 | 1/2 |
| 6 | QPSK | 1.2500 | 5/8 |
| 7 | QPSK | 1.5000 | 3/4 |
| 8 | QPSK | 1.7500 | 7/8 |
| 9 | QPSK | 2.0000 | 1 |

(continued)

| MCS table | | | |
|---|---|---|---|
| Modulation and coding index | Modulation scheme | Transmission efficiency | Coding rate (R) |
| 10 | 8PSK | 1.8750 | 5/8 |
| 11 | 8PSK | 2.2500 | 3/4 |
| 12 | 8PSK | 2.6250 | 7/8 |
| 13 | 8PSK | 3.0000 | 1 |

Solution 10: The predefined MCS information set includes the information subsets in Implementation 12, Implementation 13, and Implementation 6.

For example, the MCS information set may be implemented in a form of a table. Table 25 is a schematic table of another possible MCS information set according to an embodiment of this application.

As shown in Table 25, coding rates corresponding to information subsets whose modulation schemes are the BPSK are arranged in ascending order as follows: {1/4, 3/8, 1/2, 5/8, 1}, and the coding rates change evenly in ascending order. Coding rates corresponding to information subsets whose modulation schemes are the QPSK are arranged in ascending order as follows: {1/2, 5/8, 5/8, 3/4, 7/8, 1}. The coding rates change evenly in ascending order, or a difference between two adjacent items is 1/8. Coding rates corresponding to information subsets whose modulation schemes are the 8PSK are arranged in ascending order as follows: {5/8, 3/4, 7/8, 1}, and the coding rates change still evenly in ascending order.

**Table 25 A plurality of information subsets in the MCS information set**

| MCS table | | | |
|---|---|---|---|
| Modulation and coding index | Modulation scheme | Coding rate (R) x 1024 | Transmission efficiency |
| 0 | BPSK | 256 | 0.2500 |
| 1 | BPSK | 384 | 0.3750 |
| 2 | BPSK | 512 | 0.5000 |
| 3 | BPSK | 640 | 0.6250 |
| 4 | BPSK | 1024 | 1.0000 |
| 5 | QPSK | 512 | 1.0000 |
| 6 | QPSK | 640 | 1.2500 |
| 7 | QPSK | 768 | 1.5000 |
| 8 | QPSK | 896 | 1.7500 |
| 9 | QPSK | 1024 | 2.000 |
| 10 | 8PSK | 640 | 1.8750 |
| 11 | 8PSK | 768 | 2.2500 |
| 12 | 8PSK | 896 | 2.6250 |
| 13 | 8PSK | 1024 | 3.0000 |

It should be understood that, in the plurality of information subsets of the information set shown in Table 25, the coding rate indication information may alternatively be represented as a coding rate, as shown in Table 26.

**Table 26 A plurality of information subsets in the MCS information set**

| MCS table | | | |
|---|---|---|---|
| Modulation and coding index | Modulation scheme | Transmission efficiency | Coding rate (R) |
| 0 | BPSK | 0.2500 | 1/4 |

(continued)

| MCS table | | | |
|---|---|---|---|
| Modulation and coding index | Modulation scheme | Transmission efficiency | Coding rate (R) |
| 1 | BPSK | 0.3750 | 3/8 |
| 2 | BPSK | 0.5000 | 1/2 |
| 3 | BPSK | 0.6250 | 5/8 |
| 4 | BPSK | 1.0000 | 1 |
| 5 | QPSK | 1.0000 | 1/2 |
| 6 | QPSK | 1.2500 | 5/8 |
| 7 | QPSK | 1.5000 | 3/4 |
| 8 | QPSK | 1.7500 | 7/8 |
| 9 | QPSK | 2.0000 | 1 |
| 10 | 8PSK | 1.8750 | 5/8 |
| 11 | 8PSK | 2.2500 | 3/4 |
| 12 | 8PSK | 2.6250 | 7/8 |
| 13 | 8PSK | 3.0000 | 1 |

Solution 11: The predefined MCS information set includes the information subsets in Implementation 14, Implementation 15, and Implementation 16.

For example, the MCS information set may be implemented in a form of a table. Table 27 is a schematic table of another possible MCS information set according to an embodiment of this application.

As shown in Table 27, coding rates corresponding to information subsets whose modulation schemes are the BPSK are arranged in ascending order as follows: {1/4, 1/3, 1}, and the coding rates change evenly in ascending order. Coding rates corresponding to information subsets whose modulation schemes are the QPSK are arranged in ascending order as follows: {1/4, 1/3, 1/2, 2/3, 3/4, 5/6, 1}. The coding rates change evenly in ascending order, or a difference between two adjacent items is 1/8. Coding rates corresponding to information subsets whose modulation schemes are the 8PSK are arranged in ascending order as follows: {2/3, 3/4, 5/6, 1}, and the coding rates change still evenly in ascending order.

**Table 27 A plurality of information subsets in the MCS information set**

| MCS table | | | |
|---|---|---|---|
| Modulation and coding index | Modulation scheme | Coding rate (R) x 1024 | Transmission efficiency |
| 0 | BPSK | 256 | 0.2500 |
| 1 | BPSK | 341 | 0.3333 |
| 2 | BPSK | 1024 | 1.0000 |
| 3 | QPSK | 256 | 0.5000 |
| 4 | QPSK | 341 | 0.6667 |
| 5 | QPSK | 512 | 1.000 |
| 3 | QPSK | 683 | 1.3333 |
| 7 | QPSK | 768 | 1.5000 |
| 8 | 8PSK | 853 | 1.6667 |
| 9 | 8PSK | 1024 | 2.0000 |
| 10 | 8PSK | 683 | 2.0000 |
| 11 | 8PSK | 768 | 2.2500 |

(continued)

| MCS table | | | |
|---|---|---|---|
| Modulation and coding index | Modulation scheme | Coding rate (R) x 1024 | Transmission efficiency |
| 12 | 8PSK | 853 | 2.5000 |
| 13 | 8PSK | 1024 | 3.000 |

It should be understood that, in the plurality of information subsets of the information set shown in Table 27, the coding rate indication information may alternatively be represented as a coding rate, as shown in Table 28.

**Table 28 A plurality of information subsets in the MCS information set**

| MCS table | | | |
|---|---|---|---|
| Modulation and coding index | Modulation scheme | Transmission efficiency | Coding rate (R) |
| 0 | BPSK | 0.2500 | 1/4 |
| 1 | BPSK | 0.3333 | 1/3 |
| 2 | BPSK | 1.0000 | 1 |
| 3 | QPSK | 0.5000 | 1/4 |
| 4 | QPSK | 0.6667 | 1/3 |
| 5 | QPSK | 1.000 | 1/2 |
| 6 | QPSK | 1.3333 | 2/3 |
| 7 | QPSK | 1.5000 | 3/4 |
| 8 | QPSK | 1.6667 | 5/6 |
| 9 | QPSK | 2.0000 | 1 |
| 10 | 8PSK | 2.0000 | 2/3 |
| 11 | 8PSK | 2.2500 | 3/4 |
| 12 | 8PSK | 2.5000 | 5/6 |
| 13 | 8PSK | 3.000 | 1 |

It should be noted that, in the foregoing plurality of solutions, the MCS information set may further include a reserved value (not shown in the foregoing tables). In a design, the MCS information set may include 16 information subsets, some information subsets each include an MCS index and a modulation and coding scheme, and some information subsets each includes a reserved value (or an MCS index and a reserved value). For example, the plurality of information subsets shown in Table 7 are used as an example, and an information set in which reserved values are supplemented is shown in Table 29.

**Table 29 MCS information set (including reserved values)**

| MCS table | | | |
|---|---|---|---|
| Modulation and coding index | Modulation scheme | Coding rate (R) x 1024 | Transmission efficiency |
| 0 | BPSK | 256 | 0.2500 |
| 1 | BPSK | 384 | 0.3750 |
| 2 | QPSK | 256 | 0.5000 |
| 3 | QPSK | 384 | 0.7500 |
| 4 | QPSK | 512 | 1.0000 |
| 5 | QPSK | 640 | 1.2500 |

(continued)

| MCS table | | | |
| --- | --- | --- | --- |
| Modulation and coding index | Modulation scheme | Coding rate (R) x 1024 | Transmission efficiency |
| 6 | QPSK | 768 | 1.5000 |
| 7 | QPSK | 896 | 1.7500 |
| 8 | 8PSK | 640 | 1.8750 |
| 9 | 8PSK | 768 | 2.2500 |
| 10 | 8PSK | 896 | 2.6250 |
| 11 | 8PSK | 1024 | 3.0000 |
| 12 | Reserved | Reserved | Reserved |
| 13 | Reserved | Reserved | Reserved |
| 14 | Reserved | Reserved | Reserved |
| 15 | Reserved | Reserved | Reserved |

The foregoing solutions are merely example solutions, and are not intended to limit the combination in this embodiment of this application.

**Embodiment 2**

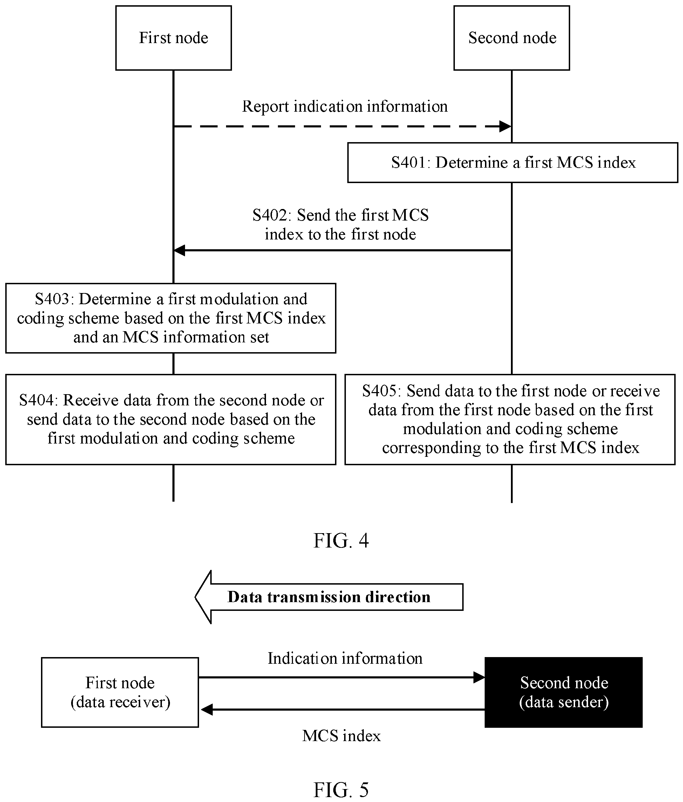

The following describes a method provided in this embodiment of this application. FIG. 4 is a schematic flowchart of a data transmission method according to an embodiment of this application. Optionally, the method shown in FIG. 4 may be implemented based on the architecture shown in FIG. 1. The method shown in FIG. 4 includes at least the following steps.

Optionally, the data transmission method may include step S401, which is specifically as follows:
Step S401: A second node determines a first MCS index.

The first MCS index corresponds to a first modulation and coding scheme. A modulation and coding scheme indicates at least one of a modulation mode, a coding scheme, or the like. For example, the modulation and coding scheme may specifically indicate at least one of a coding rate used for coding, transmission efficiency that needs to be reached, or the like. The modulation mode may include one or more of BPSK, QPSK, 8PSK, or the like.

Optionally, the first modulation and coding scheme may include one or more of a first modulation mode, a first modulation order, first coding rate indication information, first transmission efficiency, or the like. The first modulation mode is one of the BPSK, the QPSK, the 8PSK, or the like. The first modulation order indicates a quantity of bits corresponding to one modulation symbol. The first coding rate indication information indicates a coding rate, or indicates a product of a coding rate and 1024 (which is referred to as coding rate x 1024 for ease of description). The first transmission efficiency describes a ratio of valid data to total transmitted data in a data transmission process. For related terms, refer to the foregoing descriptions or definitions in the conventional technology.

In a design, the first MCS index and the first modulation and coding scheme belong to a first MCS information subset. The first MCS index may correspond to the first MCS information subset, so that the first MCS index corresponds to the first modulation and coding scheme.

For example, the first MCS index (for example, 0) may correspond to the following information subset:
{MCS index: 0, modulation mode: BPSK, coding rate x 1024: 384, transmission efficiency: 0.3750}, that is, a modulation and coding scheme corresponding to the index 0 is: A modulation mode is the BPSK, coding rate indication information is 384, and a coding rate indicated by the coding rate indication information is 384/1024 = 3/8.

For example, the first MCS index (for example, 0) corresponds to the following one information subset in the information set:
{MCS index: 0, modulation order (Qm): 1, transmission efficiency: 0.3750}.

Because a modulation order corresponding to the BPSK is 1, a modulation order corresponding to the QPSK is 2, and a modulation order corresponding to the 8PSK is 3, a modulation mode corresponding to the index 0 is a modulation mode whose modulation order is 1, namely, the BPSK. Based on the transmission efficiency and the modulation order, it may be learned that a coding rate is 3/8. It should be understood that, in a case in which different modulation modes may correspond to a same modulation order, the different modulation modes may be indexed by using other identifiers.

Optionally, a first node may determine the first MCS index from a plurality of MCS indexes in the MCS information set. The MCS information set includes a plurality of MCS information subsets, and each of the plurality of MCS information subsets includes a different MCS index.

The foregoing MCS information set may specifically include N MCS information subsets, where N is an integer, for example, N=1, 2, 3.... The MCS information set includes one or more pieces of the following information: an MCS index, a modulation mode, a modulation order, a coding rate, transmission efficiency, a reserved value, and the like.

In a design, the quantity N of MCS information subsets in the MCS information set may further meet the following condition: $3 \leq N \leq 16$. The MCS information set includes at least three MCS information subsets, and in comparison with a BLE technology and the like, more modulation and coding schemes may be provided for selection. In addition, too many modulation and coding schemes may cause excessive sensitivity to channel quality, and consequently, a large amount of time is consumed in switching between the modulation and coding schemes, affecting transmission efficiency. Especially for some scenarios in which an interference condition does not change extremely, for example, a home scenario and an in-vehicle scenario, 16 MCS information sets are enough to meet different channel quality changes, so that resource consumption is reduced.

In another possible design, the MCS information set includes M MCS information subsets. Modulation modes in the M MCS information subsets are one or more of a BPSK subset, a QPSK subset, or an 8PSK subset, where M is an integer, and $M \leq N$. Coding rates corresponding to coding rate indication information in a plurality of MCS information subsets whose modulation modes are the same in the M MCS information subsets change evenly in ascending order.

For a possible situation, an implementation, a solution, and the like of the MCS information set, refer to the related descriptions in Embodiment 1. Details are not described herein again.

Optionally, the MCS information set may be predefined, specifically, pre-specified in a protocol, or preconfigured by an administrator, a developer, a management node, or the like in the second node, or pre-stored in the second node, or the like.

Optionally, the second node may determine the first MCS index based on indication information. The indication information describes quality of a communication channel. The indication information may include at least one of a signal to interference plus noise ratio (Signal to Interference plus Noise Ratio, SINR, also referred to as a signal-to-interference-plus-noise ratio), an acknowledgment (Acknowledge, ACK), a negative acknowledgment (Negative Acknowledge, NACK), reference signal received power (reference signal received power, RSRP), reference signal received quality (reference signal received quality, RSRQ), and the like.

Specifically, the communication channel includes one or more of an uplink channel (for example, one or more of an uplink data channel, an uplink access channel, and an uplink control channel), a downlink channel (for example, one or more of a downlink data channel, a downlink broadcast channel, and a downlink control channel), and the like.

In some implementations, the channel may also be replaced with a link, for example, a C link and a T link. The C link may also be understood as a downlink, and usually includes one or more channels such as a data channel, a broadcast channel, a control channel (including a channel used to transmit a channel state information reference signal (Channel State Information Reference Signal, CSI-RS), and a channel used to transmit a demodulation reference signal (Demodulation Reference Signal, DMRS)), and the like. The T link may also be understood as an uplink, and usually includes one or more channels such as a data channel, an access channel, a control channel (including a channel used to transmit an acknowledgment character (ACKnowledge Character, ACK), a channel used to transmit a sounding reference signal (Sounding Reference Signal, SRS), and a channel used to transmit a DMRS), and the like.

For example, in a case in which the indication information is an SINR, a larger SINR indicates higher strength of a received wanted signal, better channel quality, and higher communication quality. Correspondingly, a smaller SINR indicates lower strength of a received wanted signal, poorer channel quality, and lower communication quality.

In a communication system, if a performance difference between modulation and coding schemes is relatively large, only a same modulation and coding scheme can be selected under different channel quality. Consequently, it is difficult to meet a user requirement, data transmission efficiency is low, and a system throughput is low. However, in the solution provided in this application, selection may be performed from a plurality of modulation modes based on channel quality indication information, and a same modulation mode usually includes a plurality of coding rates, thereby greatly improving flexibility of selecting a modulation and coding scheme. Further, the coding rates in a same modulation mode change evenly, so that a jump of a data throughput in a selection process is avoided, and stability of data transmission is enhanced. Further, performance differences between the plurality of modulation and coding schemes are relatively even, so that an appropriate modulation and coding scheme can be selected under different channel quality, relatively proper transmission efficiency is obtained, and a throughput is improved.

For example, when the MCS table shown in Table 7 is used for selection, selection may be performed from modulation modes such as the BPSK, the QPSK, and the 8PSK based on the indication information, or selection may be performed from a plurality of different coding rates. This improves selection flexibility. When channel quality is relatively good, a high-order modulation and coding scheme (including a high modulation order and high transmission efficiency) may be selected. When channel quality is relatively poor, a low-order modulation and coding scheme may be selected. Therefore, an appropriate modulation and coding scheme can be selected under different channel quality, so that transmission efficiency is improved, and a throughput is improved.

As shown in FIG. 3, when a signal-to-noise ratio is about -2, a modulation and coding scheme whose MCS index is 0 (a modulation mode is the BPSK, and R is 3/8) may be used, where transmission efficiency is 0.3750. When a signal-to-noise ratio is about -1, a modulation and coding scheme whose MCS index is 1 (a modulation mode is the QPSK, and R is 1/4) may be used, where transmission efficiency is 0.5000. When a signal-to-noise ratio is about 1, a modulation and coding scheme whose MCS index is 2 (a modulation and coding scheme is the QPSK, and R is 3/8) may be selected, where transmission efficiency is 0.7500. Other cases are deduced by analogy.

Optionally, the foregoing indication information may be reported by the first node to the second node, or may be determined by the second node based on a channel status (specifically, may be obtained through collection or measurement), or may be determined by the second node and reported by the first node. Specifically, there may be the following several possible scenarios.

Scenario 1: A data receiver sends indication information to a data sender, and the data sender determines an MCS index based on the indication information.

For example, refer to FIG. 5. FIG. 5 is a schematic diagram of a possible MCS index determining method according to an embodiment of this application. As shown in FIG. 5, a first node is a data receiver, and a second node is a data sender. The first node sends indication information to the second node. Correspondingly, the second node determines a first MCS index from an MCS information set based on the indication information.

For example, information A is obtained by the second node and the first node through pre-configuration, pre-definition, or negotiation. The second node sends the information A to the first node, and the first node actually receives informationAI. The first node obtains, based on the informationAI and the original informationA, indication information indicating a channel status. The first node sends the indication information to the second node, and correspondingly, the second node learns of the current channel status based on the indication information fed back by the second node, and then determines, from a plurality of MCS information sets, an MCS index applicable to current channel quality.

For another example, the second node sends information A to the first node, and the first node obtains indication information such as an acknowledgment ACK or a negative acknowledgment NACK based on whether the information A is successfully received (or whether the information A is successfully decoded). Correspondingly, the second node learns of a current channel status based on indication information fed back by the second node, and then determines, from a plurality of MCS information sets, an MCS index applicable to current channel quality.

Scenario 2: A data receiver determines indication information, and the data receiver determines an MCS index based on the indication information. The data receiver sends the MCS index to a data sender.

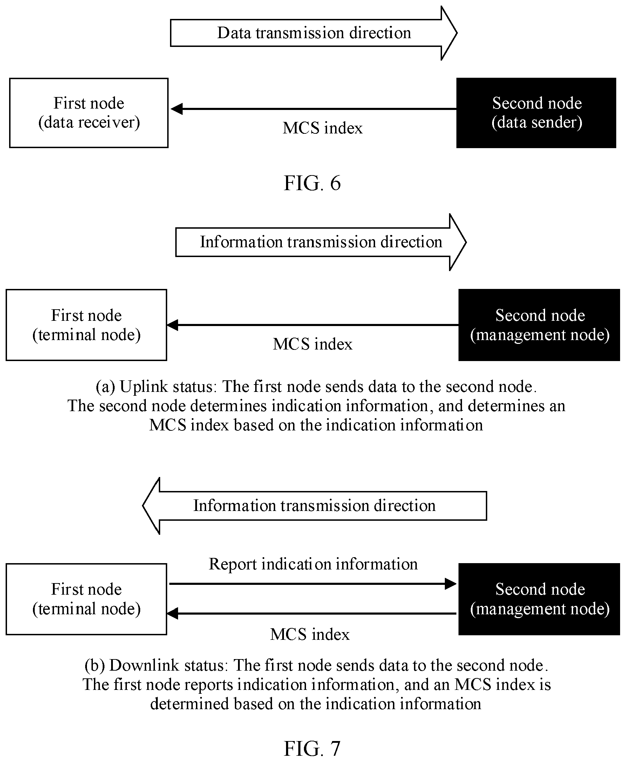

For example, refer to FIG. 6. FIG. 6 is a schematic diagram of another possible MCS index determining method according to an embodiment of this application. As shown in FIG. 6, a second node is a data receiver, and a first node is a data sender. The second node may determine indication information, and determine an MCS index based on the indication information. The second node may send the MCS index to the first node.

For example, the first node sends information B to the second node, and the second node obtains the indication information such as an acknowledgment ACK or a negative acknowledgment NACK based on whether the information B is successfully received (or decoded). The second node determines, from a plurality of MCS indexes based on the ACK/NACK, an MCS index applicable to current channel quality.

Scenario 3: A management node determines an MCS index. Specifically, different nodes may be configured to implement different functions. In a communication process, some nodes may manage other nodes. For example, a node may allocate a communication resource, or determine a communication mode. In this application, a node that manages another node is referred to as a management node (or referred to as a G node, a master node, or an uplink node), and a managed node is referred to as a terminal node (or referred to as a T node, a slave node, or a downlink node). Generally, a link used by the terminal node to send information to the management node is referred to as an uplink (or referred to as a T link), and a link used by the management node to send information to the terminal node is referred to as a downlink (or referred to as a G link). It should be understood that, in different communication networks, nodes may have different identities, and a management node in a communication network A may serve as a terminal node in a communication network B.

For example, refer to FIG. 7. FIG. 7 is a schematic diagram of another possible MCS index determining method according to an embodiment of this application. As shown in FIG. 7, a second node is a management node, and a first node is a terminal node. Refer to part (a) of FIG. 7. During uplink transmission, the second node may determine indication information based on a status of receiving information, where the indication information may indicate channel quality of an uplink. The second node determines, from a plurality of MCS indexes based on the indication information, an MCS index applicable to current channel quality.

Refer to part (b) of FIG. 7. During downlink transmission, the first node may determine indication information based on a status of receiving information, where the indication information may indicate channel quality of a downlink.

The first node reports the indication information to the second node. Correspondingly, the second node receives the reported indication information, and then determines, from a plurality of MCS indexes, an MCS index applicable to current channel quality.

Step S402: The second node sends the first MCS index to the first node. Correspondingly, the first node receives the first MCS index from the second node.

Step S403: The first node determines a first modulation and coding scheme based on the first MCS index and a predefined MCS information set.

Specifically, the first node has an MCS information set that is the same as that in the second node. Therefore, the first modulation and coding scheme can be determined from the MCS information set based on the first MCS index. Optionally, the first modulation and coding scheme may include one or more of a first modulation mode, a first modulation order, first coding rate indication information, first transmission efficiency, or the like. For the related descriptions, refer to the foregoing embodiments.

For example, if the first MCS index is 0, and the MCS information set is shown in Table 7, when an MCS index is 1, a corresponding modulation and coding scheme is: A modulation mode is BPSK, coding rate indication information is 384, and a coding rate indicated by the coding rate indication information is 384/1024 = 3/8.

For a possible situation, an implementation, and a solution of the MCS information set, refer to the descriptions in step S401, Embodiment 1, and the like. Details are not described herein again.

Step S404: The first node receives data sent by the second node or sends data to the second node, based on the first modulation and coding scheme.

Specifically, the first modulation and coding scheme includes the first modulation mode, the first modulation order, the first coding rate indication information, the first transmission efficiency, and the like.

The first node may modulate and/or demodulate the transmitted data based on the modulation mode included in the first modulation and coding scheme. Similarly, the first node may encode and/or decode the transmitted data based on the coding rate indication information included in the first modulation and coding scheme.

For example, the following lists two possible scenarios.

Scenario 1: The second node sends the first MCS index to the first node. The first node encodes and modulates, based on a modulation and coding scheme corresponding to the first MCS index, data data1 to be sent to the second node, to obtain a radio signal. Correspondingly, the second node receives the radio signal, and decodes and demodulates the radio signal based on the modulation and coding scheme corresponding to the first MCS index, to obtain the data data1.

For example, the MCS information set is the MCS table shown in Table 7, and the first MCS index is 8, where a corresponding first modulation mode is the 8PSK, and a corresponding coding rate is 5/8. Therefore, when the first node sends the data data1 to the second node, the data data1 may be encoded at the coding rate of 5/8. Further, the first node modulates the encoded data data1 based on the 8PSK, to obtain a modulation symbol. The modulation symbol may be sent by using an antenna and become a radio signal. Correspondingly, the second node receives the radio signal by using the antenna, and demodulates and decodes the radio signal by using the same modulation and coding scheme, to obtain the transmitted data data1.

Scenario 2: The second node sends the first MCS index to the first node. When receiving a radio signal from the second node, the first node demodulates and decodes the radio signal based on a modulation and coding scheme corresponding to the first MCS index, to obtain transmitted data.

For example, the MCS information set is the MCS table shown in Table 7, and the first MCS index is 5, where a corresponding first modulation mode is the QPSK, and a corresponding coding rate is 5/8. When receiving the radio signal from the second node, the first node demodulates the radio signal based on the QPSK, and decodes the radio signal at the coding rate of 5/8, to obtain the transmitted data.

Step S405: The second node sends data to the first node or receives data sent by the first node, based on the first modulation mode corresponding to the first MCS index.

For details, refer to the description of the first node in step S404.

In the embodiment shown in FIG. 4, the second node determines the first MCS index from the MCS information set, and the first node and the second node may perform data transmission based on the modulation and coding scheme corresponding to the first MCS index. Because the MCS information set includes a plurality of modulation and coding schemes, and a same modulation mode usually includes a plurality of coding rates, flexibility of selecting a modulation and coding scheme is greatly improved, and communication stability is enhanced.

Further, the coding rates in the same modulation mode change evenly, so that a jump of a data throughput is avoided, and stability of data transmission is enhanced. In addition, performance differences between the plurality of modulation and coding schemes are relatively even, so that an appropriate modulation and coding scheme can be selected under different channel quality, which can maximize a transmission capability of a radio channel, improve data transmission efficiency, and improve a throughput.

The foregoing describes in detail the methods in embodiments of this application. The following provides apparatuses in embodiments of this application.

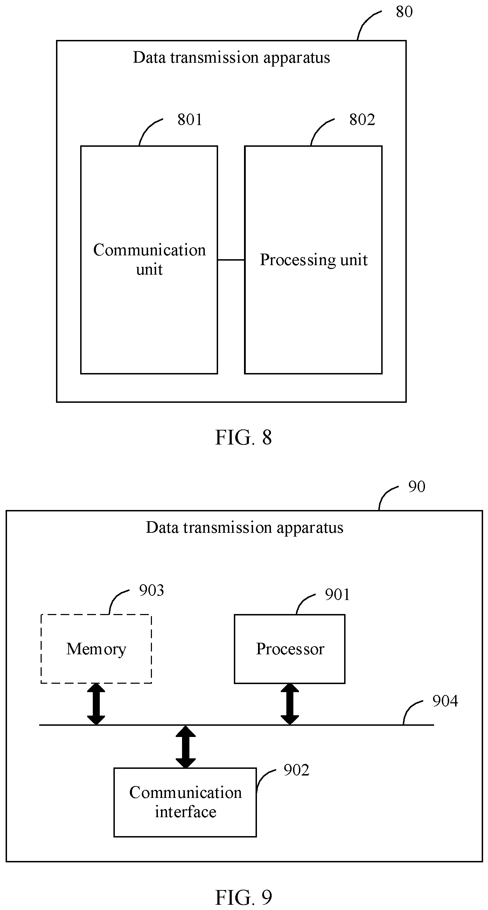

FIG. 8 is a schematic diagram of a structure of a data transmission apparatus 80 according to an embodiment of this application. The apparatus 80 may be a node, or may be a component such as a chip, a software module, or an integrated circuit in a node. The data transmission apparatus 80 is configured to implement the foregoing data transmission method, for example, the data transmission method in the embodiment shown in FIG. 4.

In a possible implementation, the apparatus 80 may include a communication unit 801 and a processing unit 802.

In a possible design, the data transmission apparatus 80 may be the first node in the foregoing embodiment.

In a possible implementation, the communication unit 801 is configured to receive a first modulation and coding scheme index MCS index from a second node.

The processing unit 802 is configured to determine, based on the first MCS index and a predefined MCS information set, a first modulation and coding scheme corresponding to the first MCS index, where the first modulation and coding scheme includes at least one of a first modulation mode, a first modulation order, first coding rate indication information, or first transmission efficiency, and the first modulation mode is one of binary phase shift keying BPSK, quadrature phase shift keying QPSK, or 8 phase shift keying 8PSK.

The communication unit 801 is further configured to receive data from the second node or send data to the second node based on the first modulation and coding scheme.

The first MCS index and the first modulation and coding scheme belong to a first MCS information subset, the first MCS information subset belongs to a predefined MCS information set, and the predefined MCS information set includes N MCS information subsets, where N is an integer, and $3 \leq N \leq 16$.

Modulation modes in M MCS information subsets in the MCS information set are one or more of a BPSK subset, a QPSK subset, or an 8PSK subset, and coding rates corresponding to coding rate indication information in a plurality of MCS information subsets whose modulation modes are the same in the M MCS information subsets change evenly in ascending order, where M is an integer, and $M \leq N$.

In a possible implementation, the communication unit 801 is further configured to:
report indication information to the second node, where the indication information includes at least one of a signal to interference plus noise ratio SINR, an acknowledgment ACK, or a negative acknowledgment NACK, and the indication information is used to determine the first MCS index.

It should be understood that, for detailed implementation of the foregoing units, refer to the related descriptions in the foregoing embodiments (for example, the related descriptions in Embodiment 1 and Embodiment 2).

In another possible design, the data transmission apparatus 80 may be the second node in the foregoing embodiments.

In a possible implementation, the communication unit 801 is configured to receive a first modulation and coding scheme index MCS index from the second node.

The processing unit 802 is configured to determine, based on the first MCS index and a predefined MCS information set, a first modulation and coding scheme corresponding to the first MCS index, where the first modulation and coding scheme includes at least one of a first modulation mode, a first modulation order, first coding rate indication information, or first transmission efficiency, and the first modulation mode is one of binary phase shift keying BPSK, quadrature phase shift keying QPSK, or 8 phase shift keying 8PSK.

The communication unit 801 is further configured to receive data from the second node or send data to the second node based on the first modulation and coding scheme.

The first MCS index and the first modulation and coding scheme belong to a first MCS information subset, the first MCS information subset belongs to a predefined MCS information set, and the predefined MCS information set includes N MCS information subsets, where N is an integer, and $3 \leq N \leq 16$.

Modulation modes in M MCS information subsets in the MCS information set are one or more of a BPSK subset, a QPSK subset, or an 8PSK subset, and coding rates corresponding to coding rate indication information in a plurality of MCS information subsets whose modulation modes are the same in the M MCS information subsets change evenly in ascending order, where M is an integer, and $M \leq N$.

In another possible implementation, the processing unit 802 is further configured to:
determine the first MCS index based on indication information, where the indication information includes at least one of a signal to interference plus noise ratio SINR, an acknowledgment ACK, or a negative acknowledgment NACK result.

In a possible implementation, the communication unit 801 is further configured to:
receive the indication information from the first node.

In another possible implementation, the processing unit 802 is further configured to:
determine the indication information based on quality of a communication channel.

It should be understood that, for detailed implementation of the foregoing units, refer to the related descriptions in the foregoing embodiments (for example, the related descriptions in Embodiment 1 and Embodiment 2).

FIG. 9 is a schematic diagram of a structure of a data transmission apparatus 90 according to an embodiment of this application. The data transmission apparatus 90 may be an independent device (for example, one or more of a server, a node, a terminal, or a vehicle), or may be an internal component (for example, a chip, a software module, or a hardware module) of an independent device. The data transmission apparatus 90 may include at least one processor 901 and a communication interface 902. Further, optionally, the data transmission apparatus 90 may further include at least one memory 903. Further, optionally, a bus 904 may be further included. The processor 901, the communication interface 902, and the memory 903 are connected through the bus 904.

Specifically, the processor 901 is a module that performs an arithmetic operation and/or a logic operation, and may be specifically one or a combination of processing modules such as a central processing unit (central processing unit, CPU), a graphics processing unit (graphics processing unit, GPU), a microprocessor unit (microprocessor unit, MPU), an application-specific integrated circuit (Application-Specific Integrated Circuit, ASIC), a field programmable gate array (Field Programmable Gate Array, FPGA), a complex programmable logic device (Complex programmable logic device, CPLD), a coprocessor (assisting the central processing unit in completing corresponding processing and application), and a microcontroller unit (Microcontroller Unit, MCU).

The communication interface 902 may be configured to provide an information input or output for the at least one processor, and/or the communication interface 902 may be configured to receive data sent from the outside and/or send data to the outside, and may be a wired link interface including an Ethernet cable or the like, or may be a wireless link (Wi-Fi, Bluetooth, universal wireless transmission, an in-vehicle short-range communication technology, another short-range wireless communication technology, or the like) interface. Optionally, the communication interface 902 may further include a transmitter (for example, a radio frequency transmitter or an antenna), a receiver, or the like coupled to the interface.

The memory 903 is configured to provide storage space, and the storage space may store data such as an operating system and a computer program. The memory 903 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The at least one processor 901 in the data transmission apparatus 90 is configured to perform the foregoing data transmission method, for example, the data transmission method described in the embodiment shown in FIG. 4.

Optionally, the processor 901 may be a processor (referred to as a dedicated processor for ease of differentiation) specially configured to perform these methods, or may be a processor that executes these methods by invoking a computer program, for example, a general-purpose processor. Optionally, at least one processor may further include both a dedicated processor and a general-purpose processor. Optionally, the computer program may be stored in the memory 903.

An embodiment of this application further provides a terminal. The terminal stores an MCS information set, for example, the plurality of MCS information sets described in Embodiment 1.

An embodiment of this application further provides a terminal. The terminal is configured to implement the method performed by the first node and/or the second node in the embodiment shown in FIG. 4.

In a possible design, the terminal includes the foregoing communication apparatus, for example, the data transmission apparatus shown in FIG. 8 or FIG. 9.

Optionally, the terminal may be a handheld terminal, an intelligent device such as a vehicle or a robot, or an intelligent transportation tool. Alternatively, optionally, the terminal may be a module in an intelligent transportation tool, for example, one or more of modules such as a vehicle cockpit domain controller CDC, a central control node, a camera, a screen, a microphone, a speaker, a radar, an electronic key, and a passive entry passive start system controller in a vehicle.

An embodiment of this application further provides a computer-readable storage medium. The computer-readable storage medium stores a computer program. When the computer program is run on one or more processors, the method in the embodiment shown in FIG. 4 is implemented.

An embodiment of this application further provides a computer program product. When the computer program product runs on one or more processors, the method in the embodiment shown in FIG. 4 is implemented.

An embodiment of this application further provides a chip system. The chip system includes a communication interface and at least one processor. The communication interface is configured to provide information input/output for the at least one processor, and/or the communication interface is configured to send/receive data. The processor is configured to invoke computer programs (or computer instructions), to implement the method in the embodiment shown in FIG. 4.

All or some of the foregoing embodiments may be implemented by software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

**Claims**

1. A data transmission method, comprising:

   receiving, by a first node, a first modulation and coding scheme index MCS index from a second node;
   determining, by the first node based on the first MCS index and a predefined MCS information set, a first modulation and coding scheme corresponding to the first MCS index, wherein the first modulation and coding scheme comprises at least one of a first modulation mode, a first modulation order, first coding rate indication information, or first transmission efficiency, and the first modulation mode is one of binary phase shift keying BPSK, quadrature phase shift keying QPSK, or 8 phase shift keying 8PSK; and
   receiving, by the first node, data from the second node or sending data to the second node based on the first modulation and coding scheme, wherein
   the first MCS index and the first modulation and coding scheme belong to a first MCS information subset, the first MCS information subset belongs to the predefined MCS information set, and the predefined MCS information set comprises N MCS information subsets, wherein N is an integer, and $3 \leq N \leq 16$; and
   modulation modes in M MCS information subsets in the MCS information set are one or more of a BPSK subset, a QPSK subset, or an 8PSK subset, and coding rates corresponding to coding rate indication information in a plurality of MCS information subsets whose modulation modes are the same in the M MCS information subsets change evenly in ascending order, wherein M is an integer, and $M \leq N$.

2. The method according to claim 1, wherein the method further comprises:
   reporting, by the first node, indication information to the second node, wherein the indication information comprises at least one of a signal to interference plus noise ratio SINR, an acknowledgment ACK, or a negative acknowledgment NACK, and the indication information is used to determine the first MCS index.

3. A data transmission method, comprising:

   determining, by a second node, a first modulation and coding scheme index MCS index, wherein the first MCS index corresponds to a first modulation and coding scheme, the first modulation and coding scheme comprises at least one of a first modulation mode, a first modulation order, first coding rate indication information, or first transmission efficiency, and the first modulation mode is one of binary phase shift keying BPSK, quadrature phase shift keying QPSK, or 8 phase shift keying 8PSK;
   sending, by the second node, the first MCS index to a first node; and
   sending, by the second node, data to the first node or receiving data from the first node based on the first modulation and coding scheme, wherein
   the first MCS index and the first modulation and coding scheme belong to a first MCS information subset, the first MCS information subset belongs to a predefined MCS information set, and the predefined MCS information set comprises N MCS information subsets, wherein N is an integer, and $3 \leq N \leq 16$; and
   modulation modes in M MCS information subsets in the MCS information set are one or more of a BPSK subset, a QPSK subset, or an 8PSK subset, and coding rates corresponding to coding rate indication information in a plurality of MCS information subsets whose modulation modes are the same in the M MCS information subsets change evenly in ascending order, wherein M is an integer, and $M \leq N$.

4. The method according to claim 3, wherein the determining, by a second node, a first modulation and coding scheme index MCS index comprises:
   determining, by the second node, the first MCS index based on indication information, wherein the indication information comprises at least one of a signal to interference plus noise ratio SINR, an acknowledgment ACK, or a negative acknowledgment NACK result.

5. The method according to claim 4, wherein the method further comprises:
receiving, by the second node, the indication information from the first node.

6. The method according to claim 4, wherein the method further comprises:
determining, by the second node, the indication information based on quality of a communication channel.

7. The method according to any one of claims 1 to 6, wherein there is at least one information subset whose modulation mode is the BPSK in the predefined MCS information set, and transmission efficiency in the at least one information subset whose modulation mode is the BPSK comprises at least one of 0.2500, 0.3333, 0.3750, 0.5000, 0.6250, or 1.0000.

8. The method according to any one of claims 1 to 7, wherein there is at least one information subset whose modulation mode is the QPSK in the predefined MCS information set, and transmission efficiency in the at least one information subset whose modulation mode is the QPSK comprises at least one of 0.5000, 0.6667, 0.7500, 1.0000, 1.2500, 1.3333, 1.5000, 1.6667, 1.7500, or 2.0000.

9. The method according to any one of claims 1 to 8, wherein there is at least one information subset whose modulation mode is the 8PSK in the predefined MCS information set, and transmission efficiency in the at least one information subset whose modulation mode is the 8PSK comprises at least one of 1.8750, 2.0000, 2.2500, 2.5000, 2.6250, or 3.0000.

10. The method according to any one of claims 1 to 9, wherein the first coding rate indication information indicates a first coding rate or indicates a product of a first coding rate and 1024.

11. The method according to any one of claims 1 to 10, wherein the predefined MCS information set comprises at least one information subset as follows:

{MCS index: a0, modulation scheme: BPSK, transmission efficiency: 0.3750, coding rate: 3/8}; or
the predefined information set comprises at least one information subset as follows:
{MCS index: a0, modulation scheme: BPSK, coding rate x 1024: 384, transmission efficiency: 0.3750}.

12. The method according to any one of claims 1 to 10, wherein the predefined MCS information set comprises at least two information subsets as follows:

{MCS index: a0, modulation scheme: BPSK, transmission efficiency: 0.2500, coding rate: 1/4}, and
{MCS index: a1, modulation scheme: BPSK, transmission efficiency: 0.3750, coding rate: 3/8}; or
the predefined information set comprises at least two information subsets as follows:

{MCS index: a0, modulation scheme: BPSK, coding rate x 1024: 256, transmission efficiency: 0.2500}, and
{MCS index: a1, modulation scheme: BPSK, coding rate x 1024: 384, transmission efficiency: 0.3750}.

13. The method according to any one of claims 1 to 10, wherein the predefined information set comprises at least three information subsets as follows:

{MCS index: a0, modulation scheme: BPSK, transmission efficiency: 0.3750, coding rate: 3/8},
{MCS index: a1, modulation scheme: BPSK, transmission efficiency: 0.5000, coding rate: 1/2}, and
{MCS index: a2, modulation scheme: BPSK, transmission efficiency: 1.0000, coding rate: 1}; or
the predefined information set comprises at least one information subset as follows:

{MCS index: a0, modulation scheme: BPSK, coding rate x 1024: 384, transmission efficiency: 0.3750},
{MCS index: a1, modulation scheme: BPSK, coding rate x 1024: 512, transmission efficiency: 0.5000}, and
{MCS index: a2, modulation scheme: BPSK, coding rate x 1024: 1024, transmission efficiency: 1.0000}.

14. The method according to any one of claims 1 to 10, wherein the predefined information set comprises at least three information subsets as follows:

{MCS index: a0, modulation scheme: BPSK, transmission efficiency: 0.2500, coding rate: 1/4},
{MCS index: a1, modulation scheme: BPSK, transmission efficiency: 0.3750, coding rate: 3/8}, and

{MCS index: a2, modulation scheme: BPSK, transmission efficiency: 1.0000, coding rate: 1}; or
the predefined information set comprises at least one information subset as follows:

> {MCS index: a0, modulation scheme: BPSK, coding rate x 1024: 256, transmission efficiency: 0.2500},
> {MCS index: a1, modulation scheme: BPSK, coding rate x 1024: 384, transmission efficiency: 0.3750}, and
> {MCS index: a2, modulation scheme: BPSK, coding rate x 1024: 1024, transmission efficiency: 1.0000}.

15. The method according to any one of claims 1 to 10, wherein the predefined information set comprises at least four information subsets as follows:

> {MCS index: a0, modulation scheme: BPSK, transmission efficiency: 0.2500, coding rate: 1/4},
> {MCS index: a1, modulation scheme: BPSK, transmission efficiency: 0.3750, coding rate: 3/8},
> {MCS index: a2, modulation scheme: BPSK, transmission efficiency: 0.5000, coding rate: 1/2}, and
> {MCS index: a3, modulation scheme: BPSK, transmission efficiency: 1.0000, coding rate: 1}; or
> the predefined information set comprises at least four information subsets as follows:

> {MCS index: a0, modulation scheme: BPSK, coding rate x 1024: 256, transmission efficiency: 0.2500},
> {MCS index: a1, modulation scheme: BPSK, coding rate x 1024: 384, transmission efficiency: 0.3750},
> {MCS index: a2, modulation scheme: BPSK, coding rate x 1024: 512, transmission efficiency: 0.5000}, and
> {MCS index: a3, modulation scheme: BPSK, coding rate x 1024: 1024, transmission efficiency: 1.0000}.

16. The method according to any one of claims 1 to 10, wherein the predefined information set comprises at least five information subsets as follows:

> {MCS index: a0, modulation scheme: BPSK, transmission efficiency: 0.2500, coding rate: 1/4},
> {MCS index: a1, modulation scheme: BPSK, transmission efficiency: 0.3750, coding rate: 3/8},
> {MCS index: a2, modulation scheme: BPSK, transmission efficiency: 0.5000, coding rate: 1/2},
> {MCS index: a3, modulation scheme: BPSK, transmission efficiency: 0.6250, coding rate: 5/8}, and
> {MCS index: a4, modulation scheme: BPSK, transmission efficiency: 1.0000, coding rate: 1}; or
> the predefined information set comprises at least five information subsets as follows:

> {MCS index: a0, modulation scheme: BPSK, coding rate x 1024: 256, transmission efficiency: 0.2500},
> {MCS index: a1, modulation scheme: BPSK, coding rate x 1024: 384, transmission efficiency: 0.3750},
> {MCS index: a2, modulation scheme: BPSK, coding rate x 1024: 512, transmission efficiency: 0.5000},
> {MCS index: a3, modulation scheme: BPSK, coding rate x 1024: 640, transmission efficiency: 0.6250}, and
> {MCS index: a4, modulation scheme: BPSK, coding rate x 1024: 1024, transmission efficiency: 1.0000}.

17. The method according to any one of claims 1 to 10, wherein the predefined information set comprises at least three information subsets as follows:

> {MCS index: a0, modulation scheme: BPSK, transmission efficiency: 0.2500, coding rate: 1/4},
> {MCS index: a1, modulation scheme: BPSK, transmission efficiency: 0.3333, coding rate: 1/3}, and
> {MCS index: a2, modulation scheme: BPSK, transmission efficiency: 1.0000, coding rate: 1}; or
> the predefined information set comprises at least four information subsets as follows:

> {MCS index: a0, modulation scheme: BPSK, coding rate x 1024: 256, transmission efficiency: 0.2500},
> {MCS index: a1, modulation scheme: BPSK, coding rate x 1024: 341, transmission efficiency: 0.3333}, and
> {MCS index: a2, modulation scheme: BPSK, coding rate x 1024: 1024, transmission efficiency: 1.0000}.

18. The method according to any one of claims 1 to 17, wherein the predefined information set comprises at least four information subsets as follows:

> {MCS index: b0, modulation scheme: QPSK, transmission efficiency: 1.0000, coding rate: 1/2},
> {MCS index: b1, modulation scheme: QPSK, transmission efficiency: 1.2500, coding rate: 5/8},
> {MCS index: b2, modulation scheme: QPSK, transmission efficiency: 1.5000, coding rate: 3/4}, and
> {MCS index: b3, modulation scheme: QPSK, transmission efficiency: 1.7500, coding rate: 7/8}; or
> the predefined information set comprises at least four information subsets as follows:

{MCS index: b0, modulation scheme: QPSK, coding rate x 1024: 512, transmission efficiency: 1.0000},
{MCS index: b1, modulation scheme: QPSK, coding rate x 1024: 640, transmission efficiency: 1.2500},
{MCS index: b2, modulation scheme: QPSK, coding rate x 1024: 768, transmission efficiency: 1.5000}, and
{MCS index: b3, modulation scheme: QPSK, coding rate x 1024: 896, transmission efficiency: 1.7500}.

19. The method according to any one of claims 1 to 17, wherein the predefined information set comprises at least four information subsets as follows:

{MCS index: b0, modulation scheme: QPSK, transmission efficiency: 0.7500, coding rate: 3/8},
{MCS index: b1, modulation scheme: QPSK, transmission efficiency: 1.0000, coding rate: 1/2},
{MCS index: b2, modulation scheme: QPSK, transmission efficiency: 1.2500, coding rate: 5/8},
{MCS index: b3, modulation scheme: QPSK, transmission efficiency: 1.5000, coding rate: 3/4}, and
{MCS index: b4, modulation scheme: QPSK, transmission efficiency: 1.7500, coding rate: 7/8}; or
the predefined information set comprises at least five information subsets as follows:

{MCS index: b0, modulation scheme: QPSK, coding rate x 1024: 384, transmission efficiency: 0.7500},
{MCS index: b1, modulation scheme: QPSK, coding rate x 1024: 512, transmission efficiency: 1.0000},
{MCS index: b2, modulation scheme: QPSK, coding rate x 1024: 640, transmission efficiency: 1.2500},
{MCS index: b3, modulation scheme: QPSK, coding rate x 1024: 768, transmission efficiency: 1.5000}, and
{MCS index: b4, modulation scheme: QPSK, coding rate x 1024: 896, transmission efficiency: 1.7500}.

20. The method according to any one of claims 1 to 17, wherein the predefined information set comprises at least six information subsets as follows:

{MCS index: b0, modulation scheme: QPSK, transmission efficiency: 0.5000, coding rate: 1/4},
{MCS index: b1, modulation scheme: QPSK, transmission efficiency: 0.7500, coding rate: 3/8},
{MCS index: b2, modulation scheme: QPSK, transmission efficiency: 1.0000, coding rate: 1/2},
{MCS index: b3, modulation scheme: QPSK, transmission efficiency: 1.2500, coding rate: 5/8},
{MCS index: b4, modulation scheme: QPSK, transmission efficiency: 1.5000, coding rate: 3/4}, and
{MCS index: b5, modulation scheme: QPSK, transmission efficiency: 1.7500, coding rate: 7/8}; or
the predefined information set comprises at least six information subsets as follows:

{MCS index: b0, modulation scheme: QPSK, coding rate x 1024: 256, transmission efficiency: 0.5000},
{MCS index: b1, modulation scheme: QPSK, coding rate x 1024: 384, transmission efficiency: 0.7500},
{MCS index: b2, modulation scheme: QPSK, coding rate x 1024: 512, transmission efficiency: 1.0000},
{MCS index: b3, modulation scheme: QPSK, coding rate x 1024: 640, transmission efficiency: 1.2500},
{MCS index: b4, modulation scheme: QPSK, coding rate x 1024: 768, transmission efficiency: 1.5000}, and
{MCS index: b5, modulation scheme: QPSK, coding rate x 1024: 896, transmission efficiency: 1.7500}.

21. The method according to any one of claims 1 to 17, wherein the predefined information set comprises at least six information subsets as follows:

{MCS index: b0, modulation scheme: QPSK, transmission efficiency: 0.7500, coding rate: 3/8},
{MCS index: b1, modulation scheme: QPSK, transmission efficiency: 1.0000, coding rate: 1/2},
{MCS index: b2, modulation scheme: QPSK, transmission efficiency: 1.2500, coding rate: 5/8},
{MCS index: b3, modulation scheme: QPSK, transmission efficiency: 1.5000, coding rate: 3/4},
{MCS index: b4, modulation scheme: QPSK, transmission efficiency: 1.7500, coding rate: 7/8}, and
{MCS index: b5, modulation scheme: QPSK, transmission efficiency: 2.0000, coding rate: 1}; or
the predefined information set comprises at least six information subsets as follows:

{MCS index: b0, modulation scheme: QPSK, coding rate x 1024: 384, transmission efficiency: 0.7500},
{MCS index: b1, modulation scheme: QPSK, coding rate x 1024: 512, transmission efficiency: 1.0000},
{MCS index: b2, modulation scheme: QPSK, coding rate x 1024: 640, transmission efficiency: 1.2500},
{MCS index: b3, modulation scheme: QPSK, coding rate x 1024: 768, transmission efficiency: 1.5000},
{MCS index: b4, modulation scheme: QPSK, coding rate x 1024: 896, transmission efficiency: 1.7500}, and
{MCS index: b5, modulation scheme: QPSK, coding rate x 1024: 1024, transmission efficiency: 2.0000}.

22. The method according to any one of claims 1 to 17, wherein the predefined information set comprises at least seven information subsets as follows:

{MCS index: b0, modulation scheme: QPSK, transmission efficiency: 0.5000, coding rate: 1/4},
{MCS index: b1, modulation scheme: QPSK, transmission efficiency: 0.7500, coding rate: 3/8},
{MCS index: b2, modulation scheme: QPSK, transmission efficiency: 1.0000, coding rate: 1/2},
{MCS index: b3, modulation scheme: QPSK, transmission efficiency: 1.2500, coding rate: 5/8},
{MCS index: b4, modulation scheme: QPSK, transmission efficiency: 1.5000, coding rate: 3/4},
{MCS index: b5, modulation scheme: QPSK, transmission efficiency: 1.7500, coding rate: 7/8}, and
{MCS index: b6, modulation scheme: QPSK, transmission efficiency: 2.0000, coding rate: 1}; or
the predefined information set comprises at least seven information subsets as follows:

{MCS index: b0, modulation scheme: QPSK, coding rate x 1024: 256, transmission efficiency: 0.5000},
{MCS index: b1, modulation scheme: QPSK, coding rate x 1024: 384, transmission efficiency: 0.7500},
{MCS index: b2, modulation scheme: QPSK, coding rate x 1024: 512, transmission efficiency: 1.0000},
{MCS index: b3, modulation scheme: QPSK, coding rate x 1024: 640, transmission efficiency: 1.2500},
{MCS index: b4, modulation scheme: QPSK, coding rate x 1024: 768, transmission efficiency: 1.5000},
{MCS index: b5, modulation scheme: QPSK, coding rate x 1024: 896, transmission efficiency: 1.7500}, and
{MCS index: b6, modulation scheme: QPSK, coding rate x 1024: 1024, transmission efficiency: 2.0000}.

23. The method according to any one of claims 1 to 17, wherein the predefined information set comprises at least five information subsets as follows:

{MCS index: b0, modulation scheme: QPSK, transmission efficiency: 1.0000, coding rate: 1/2},
{MCS index: b1, modulation scheme: QPSK, transmission efficiency: 1.2500, coding rate: 5/8},
{MCS index: b2, modulation scheme: QPSK, transmission efficiency: 1.5000, coding rate: 3/4},
{MCS index: b3, modulation scheme: QPSK, transmission efficiency: 1.7500, coding rate: 7/8}, and
{MCS index: b4, modulation scheme: QPSK, transmission efficiency: 2.0000, coding rate: 1}; or
the predefined information set comprises at least five information subsets as follows:

{MCS index: b0, modulation scheme: QPSK, coding rate x 1024: 512, transmission efficiency: 1.0000},
{MCS index: b1, modulation scheme: QPSK, coding rate x 1024: 640, transmission efficiency: 1.2500},
{MCS index: b2, modulation scheme: QPSK, coding rate x 1024: 768, transmission efficiency: 1.5000},
{MCS index: b3, modulation scheme: QPSK, coding rate x 1024: 896, transmission efficiency: 1.7500}, and
{MCS index: b4, modulation scheme: QPSK, coding rate x 1024: 1024, transmission efficiency: 2.0000}.

24. The method according to any one of claims 1 to 17, wherein the predefined information set comprises at least seven information subsets as follows:

{MCS index: b0, modulation scheme: QPSK, transmission efficiency: 0.5000, coding rate: 1/4},
{MCS index: b1, modulation scheme: QPSK, transmission efficiency: 0.6667, coding rate: 1/3},
{MCS index: b2, modulation scheme: QPSK, transmission efficiency: 1.0000, coding rate: 1/2},
{MCS index: b3, modulation scheme: QPSK, transmission efficiency: 1.3333, coding rate: 2/3},
{MCS index: b4, modulation scheme: QPSK, transmission efficiency: 1.5000, coding rate: 3/4},
{MCS index: b5, modulation scheme: QPSK, transmission efficiency: 1.6667, coding rate: 5/6}, and
{MCS index: b6, modulation scheme: QPSK, transmission efficiency: 2.0000, coding rate: 1}; or
the predefined information set comprises at least seven information subsets as follows:

{MCS index: b0, modulation scheme: QPSK, coding rate x 1024: 256, transmission efficiency: 0.5000},
{MCS index: b1, modulation scheme: QPSK, coding rate x 1024: 341, transmission efficiency: 0.6667},
{MCS index: b2, modulation scheme: QPSK, coding rate x 1024: 512, transmission efficiency: 1.0000},
{MCS index: b3, modulation scheme: QPSK, coding rate x 1024: 683, transmission efficiency: 1.3333},
{MCS index: b4, modulation scheme: QPSK, coding rate x 1024: 768, transmission efficiency: 1.5000},
{MCS index: b5, modulation scheme: QPSK, coding rate x 1024: 853, transmission efficiency: 1.6667}, and
{MCS index: b6, modulation scheme: QPSK, coding rate x 1024: 1024, transmission efficiency: 2.0000}.

25. The method according to any one of claims 1 to 17, wherein the predefined information set comprises at least four information subsets as follows:

{MCS index: c0, modulation scheme: 8PSK, transmission efficiency: 1.8750, coding rate: 5/8},
{MCS index: c1, modulation scheme: 8PSK, transmission efficiency: 2.2500, coding rate: 3/4},
{MCS index: c2, modulation scheme: 8PSK, transmission efficiency: 2.6250, coding rate: 7/8}, and
{MCS index: c3, modulation scheme: 8PSK, transmission efficiency: 3.0000, coding rate: 1}; or
the predefined information set comprises at least four information subsets as follows:

{MCS index: c0, modulation mode: 8PSK, coding rate x 1024: 640, transmission efficiency: 1.8750},
{MCS index: c1, modulation mode: 8PSK, coding rate x 1024: 768, transmission efficiency: 2.2500},
{MCS index: c2, modulation mode: 8PSK, coding rate x 1024: 896, transmission efficiency: 2.6250}, and
{MCS index: c3, modulation mode: 8PSK, coding rate x 1024: 1024, transmission efficiency: 3.0000}.

26. The method according to any one of claims 1 to 25, wherein the predefined information set comprises at least four information subsets as follows:

{MCS index: c0, modulation scheme: 8PSK, transmission efficiency: 2.0000, coding rate: 2/3},
{MCS index: c1, modulation scheme: 8PSK, transmission efficiency: 2.2500, coding rate: 3/4},
{MCS index: c2, modulation scheme: 8PSK, transmission efficiency: 2.5000, coding rate: 5/6}, and
{MCS index: c3, modulation scheme: 8PSK, transmission efficiency: 3.0000, coding rate: 1}; or
the predefined information set comprises at least four information subsets as follows:

{MCS index: c0, modulation mode: 8PSK, coding rate x 1024: 683, transmission efficiency: 2.0000},
{MCS index: c1, modulation mode: 8PSK, coding rate x 1024: 768, transmission efficiency: 2.2500},
{MCS index: c2, modulation mode: 8PSK, coding rate x 1024: 853, transmission efficiency: 2.5000}, and
{MCS index: c3, modulation mode: 8PSK, coding rate x 1024: 1024, transmission efficiency: 3.0000}.

27. A data transmission apparatus, comprising:

a communication unit, configured to receive a first modulation and coding scheme index MCS index from a second node; and
a processing unit, configured to determine, based on the first MCS index and a predefined MCS information set, a first modulation and coding scheme corresponding to the first MCS index, wherein the first modulation and coding scheme comprises at least one of a first modulation mode, a first modulation order, first coding rate indication information, or first transmission efficiency, and the first modulation mode is one of binary phase shift keying BPSK, quadrature phase shift keying QPSK, or 8 phase shift keying 8PSK, wherein
the communication unit is further configured to receive data from the second node or send data to the second node based on the first modulation and coding scheme, wherein
the first MCS index and the first modulation and coding scheme belong to a first MCS information subset, the first MCS information subset belongs to the predefined MCS information set, and the predefined MCS information set comprises N MCS information subsets, wherein N is an integer, and $3 \leq N \leq 16$; and
modulation modes in M MCS information subsets in the MCS information set are one or more of a BPSK subset, a QPSK subset, or an 8PSK subset, and coding rates corresponding to coding rate indication information in a plurality of MCS information subsets whose modulation modes are the same in the M MCS information subsets change evenly in ascending order, wherein M is an integer, and $M \leq N$.

28. The apparatus according to claim 27, wherein the communication unit is further configured to:
report indication information to the second node, wherein the indication information comprises at least one of a signal to interference plus noise ratio SINR, an acknowledgment ACK, or a negative acknowledgment NACK, and the indication information is used to determine the first MCS index.

29. A data transmission apparatus, comprising:

a processing unit, configured to determine a first modulation and coding scheme index MCS index, wherein the first MCS index corresponds to a first modulation and coding scheme, the first modulation and coding scheme comprises at least one of a first modulation mode, a first modulation order, first coding rate indication information, or first transmission efficiency, and the first modulation mode is one of binary phase shift keying BPSK, quadrature phase shift keying QPSK, or 8 phase shift keying 8PSK; and
a communication unit, configured to send the first MCS index to a first node, wherein
the communication unit is further configured to send data to the first node or receive data from the first node based on the first modulation and coding scheme, wherein

the first MCS index and the first modulation and coding scheme belong to a first MCS information subset, the first MCS information subset belongs to a predefined MCS information set, and the predefined MCS information set comprises N MCS information subsets, wherein N is an integer, and 3≤N≤16; and

modulation modes in M MCS information subsets in the MCS information set are one or more of a BPSK subset, a QPSK subset, or an 8PSK subset, and coding rates corresponding to coding rate indication information in a plurality of MCS information subsets whose modulation modes are the same in the M MCS information subsets change evenly in ascending order, wherein M is an integer, and M≤N.

30. The apparatus according to claim 29, wherein the processing unit is further configured to:
determine the first MCS index based on indication information, wherein the indication information comprises at least one of a signal to interference plus noise ratio SINR, an acknowledgment ACK, or a negative acknowledgment NACK result.

31. The apparatus according to claim 30, wherein the communication unit is further configured to:
receive the indication information from the first node.

32. The apparatus according to claim 30, wherein the processing unit is further configured to:
determine the indication information based on quality of a communication channel.

33. The apparatus according to any one of claims 27 to 32, wherein there is at least one information subset whose modulation mode is the BPSK in the predefined MCS information set, and transmission efficiency in the at least one information subset whose modulation mode is the BPSK comprises at least one of 0.2500, 0.3333, 0.3750, 0.5000, 0.6250, or 1.0000.

34. The apparatus according to any one of claims 27 to 33, wherein there is at least one information subset whose modulation mode is the QPSK in the predefined MCS information set, and transmission efficiency in the at least one information subset whose modulation mode is the QPSK comprises at least one of 0.5000, 0.6667, 0.7500, 1.0000, 1.2500, 1.3333, 1.5000, 1.6667, 1.7500, or 2.0000.

35. The apparatus according to any one of claims 27 to 34, wherein there is at least one information subset whose modulation mode is the 8PSK in the predefined MCS information set, and transmission efficiency in the at least one information subset whose modulation mode is the 8PSK comprises at least one of 1.8750, 2.0000, 2.2500, 2.5000, 2.6250, or 3.0000.

36. The apparatus according to any one of claims 27 to 35, wherein the first coding rate indication information indicates a first coding rate or indicates a product of a first coding rate and 1024.

37. The apparatus according to any one of claims 27 to 36, wherein the predefined MCS information set comprises at least one information subset as follows:

{MCS index: a0, modulation scheme: BPSK, transmission efficiency: 0.3750, coding rate: 3/8}; or
the predefined information set comprises at least one information subset as follows:
{MCS index: a0, modulation scheme: BPSK, coding rate x 1024: 384, transmission efficiency: 0.3750}.

38. The apparatus according to any one of claims 27 to 36, wherein the predefined MCS information set comprises at least two information subset as follows:

{MCS index: a0, modulation scheme: BPSK, transmission efficiency: 0.2500, coding rate: 1/4}, and
{MCS index: a1, modulation scheme: BPSK, transmission efficiency: 0.3750, coding rate: 3/8}; or
the predefined information set comprises at least two information subsets as follows:

{MCS index: a0, modulation scheme: BPSK, coding rate x 1024: 256, transmission efficiency: 0.2500}, and
{MCS index: a1, modulation scheme: BPSK, coding rate x 1024: 384, transmission efficiency: 0.3750}.

39. The apparatus according to any one of claims 27 to 36, wherein the predefined information set comprises at least three information subsets as follows:

{MCS index: a0, modulation scheme: BPSK, transmission efficiency: 0.3750, coding rate: 3/8},
{MCS index: a1, modulation scheme: BPSK, transmission efficiency: 0.5000, coding rate: 1/2}, and
{MCS index: a2, modulation scheme: BPSK, transmission efficiency: 1.0000, coding rate: 1}; or
the predefined information set comprises at least one information subset as follows:

{MCS index: a0, modulation scheme: BPSK, coding rate x 1024: 384, transmission efficiency: 0.3750},
{MCS index: a1, modulation scheme: BPSK, coding rate x 1024: 512, transmission efficiency: 0.5000}, and
{MCS index: a2, modulation scheme: BPSK, coding rate x 1024: 1024, transmission efficiency: 1.0000}.

40. The apparatus according to any one of claims 27 to 36, wherein the predefined information set comprises at least three information subsets as follows:

{MCS index: a0, modulation scheme: BPSK, transmission efficiency: 0.2500, coding rate: 1/4},
{MCS index: a1, modulation scheme: BPSK, transmission efficiency: 0.3750, coding rate: 3/8}, and
{MCS index: a2, modulation scheme: BPSK, transmission efficiency: 1.0000, coding rate: 1}; or
the predefined information set comprises at least one information subset as follows:

{MCS index: a0, modulation scheme: BPSK, coding rate x 1024: 256, transmission efficiency: 0.2500},
{MCS index: a1, modulation scheme: BPSK, coding rate x 1024: 384, transmission efficiency: 0.3750}, and
{MCS index: a2, modulation scheme: BPSK, coding rate x 1024: 1024, transmission efficiency: 1.0000}.

41. The apparatus according to any one of claims 27 to 36, wherein the predefined information set comprises at least four information subsets as follows:

{MCS index: a0, modulation scheme: BPSK, transmission efficiency: 0.2500, coding rate: 1/4},
{MCS index: a1, modulation scheme: BPSK, transmission efficiency: 0.3750, coding rate: 3/8},
{MCS index: a2, modulation scheme: BPSK, transmission efficiency: 0.5000, coding rate: 1/2}, and
{MCS index: a3, modulation scheme: BPSK, transmission efficiency: 1.0000, coding rate: 1}; or
the predefined information set comprises at least four information subsets as follows:

{MCS index: a0, modulation scheme: BPSK, coding rate x 1024: 256, transmission efficiency: 0.2500},
{MCS index: a1, modulation scheme: BPSK, coding rate x 1024: 384, transmission efficiency: 0.3750},
{MCS index: a2, modulation scheme: BPSK, coding rate x 1024: 512, transmission efficiency: 0.5000}, and
{MCS index: a3, modulation scheme: BPSK, coding rate x 1024: 1024, transmission efficiency: 1.0000}.

42. The apparatus according to any one of claims 27 to 36, wherein the predefined information set comprises at least five information subsets as follows:

{MCS index: a0, modulation scheme: BPSK, transmission efficiency: 0.2500, coding rate: 1/4},
{MCS index: a1, modulation scheme: BPSK, transmission efficiency: 0.3750, coding rate: 3/8},
{MCS index: a2, modulation scheme: BPSK, transmission efficiency: 0.5000, coding rate: 1/2},
{MCS index: a3, modulation scheme: BPSK, transmission efficiency: 0.6250, coding rate: 5/8}, and
{MCS index: a4, modulation scheme: BPSK, transmission efficiency: 1.0000, coding rate: 1}; or
the predefined information set comprises at least five information subsets as follows:

{MCS index: a0, modulation scheme: BPSK, coding rate x 1024: 256, transmission efficiency: 0.2500},
{MCS index: a1, modulation scheme: BPSK, coding rate x 1024: 384, transmission efficiency: 0.3750},
{MCS index: a2, modulation scheme: BPSK, coding rate x 1024: 512, transmission efficiency: 0.5000},
{MCS index: a3, modulation scheme: BPSK, coding rate x 1024: 640, transmission efficiency: 0.6250}, and
{MCS index: a4, modulation scheme: BPSK, coding rate x 1024: 1024, transmission efficiency: 1.0000}.

43. The apparatus according to any one of claims 27 to 36, wherein the predefined information set comprises at least three information subsets as follows:

{MCS index: a0, modulation scheme: BPSK, transmission efficiency: 0.2500, coding rate: 1/4},
{MCS index: a1, modulation scheme: BPSK, transmission efficiency: 0.3333, coding rate: 1/3}, and
{MCS index: a2, modulation scheme: BPSK, transmission efficiency: 1.0000, coding rate: 1}; or
the predefined information set comprises at least four information subsets as follows:

{MCS index: a0, modulation scheme: BPSK, coding rate x 1024: 256, transmission efficiency: 0.2500},
{MCS index: a1, modulation scheme: BPSK, coding rate x 1024: 341, transmission efficiency: 0.3333}, and
{MCS index: a2, modulation scheme: BPSK, coding rate x 1024: 1024, transmission efficiency: 1.0000}.

44. The apparatus according to any one of claims 27 to 43, wherein the predefined information set comprises at least four information subsets as follows:

{MCS index: b0, modulation scheme: QPSK, transmission efficiency: 1.0000, coding rate: 1/2},
{MCS index: b1, modulation scheme: QPSK, transmission efficiency: 1.2500, coding rate: 5/8},
{MCS index: b2, modulation scheme: QPSK, transmission efficiency: 1.5000, coding rate: 3/4}, and
{MCS index: b3, modulation scheme: QPSK, transmission efficiency: 1.7500, coding rate: 7/8}; or
the predefined information set comprises at least four information subsets as follows:

{MCS index: b0, modulation scheme: QPSK, coding rate x 1024: 512, transmission efficiency: 1.0000},
{MCS index: b1, modulation scheme: QPSK, coding rate x 1024: 640, transmission efficiency: 1.2500},
{MCS index: b2, modulation scheme: QPSK, coding rate x 1024: 768, transmission efficiency: 1.5000}, and
{MCS index: b3, modulation scheme: QPSK, coding rate x 1024: 896, transmission efficiency: 1.7500}.

45. The apparatus according to any one of claims 27 to 43, wherein the predefined information set comprises at least five information subsets as follows:

{MCS index: b0, modulation scheme: QPSK, transmission efficiency: 0.7500, coding rate: 3/8},
{MCS index: b1, modulation scheme: QPSK, transmission efficiency: 1.0000, coding rate: 1/2},
{MCS index: b2, modulation scheme: QPSK, transmission efficiency: 1.2500, coding rate: 5/8},
{MCS index: b3, modulation scheme: QPSK, transmission efficiency: 1.5000, coding rate: 3/4}, and
{MCS index: b4, modulation scheme: QPSK, transmission efficiency: 1.7500, coding rate: 7/8}; or
the predefined information set comprises at least five information subsets as follows:

{MCS index: b0, modulation scheme: QPSK, coding rate x 1024: 384, transmission efficiency: 0.7500},
{MCS index: b1, modulation scheme: QPSK, coding rate x 1024: 512, transmission efficiency: 1.0000},
{MCS index: b2, modulation scheme: QPSK, coding rate x 1024: 640, transmission efficiency: 1.2500},
{MCS index: b3, modulation scheme: QPSK, coding rate x 1024: 768, transmission efficiency: 1.5000}, and
{MCS index: b4, modulation scheme: QPSK, coding rate x 1024: 896, transmission efficiency: 1.7500}.

46. The apparatus according to any one of claims 27 to 43, wherein the predefined information set comprises at least six information subsets as follows:

{MCS index: b0, modulation scheme: QPSK, transmission efficiency: 0.5000, coding rate: 1/4},
{MCS index: b1, modulation scheme: QPSK, transmission efficiency: 0.7500, coding rate: 3/8},
{MCS index: b2, modulation scheme: QPSK, transmission efficiency: 1.0000, coding rate: 1/2},
{MCS index: b3, modulation scheme: QPSK, transmission efficiency: 1.2500, coding rate: 5/8},
{MCS index: b4, modulation scheme: QPSK, transmission efficiency: 1.5000, coding rate: 3/4}, and
{MCS index: b5, modulation scheme: QPSK, transmission efficiency: 1.7500, coding rate: 7/8}; or
the predefined information set comprises at least six information subsets as follows:

{MCS index: b0, modulation scheme: QPSK, coding rate x 1024: 256, transmission efficiency: 0.5000},
{MCS index: b1, modulation scheme: QPSK, coding rate x 1024: 384, transmission efficiency: 0.7500},
{MCS index: b2, modulation scheme: QPSK, coding rate x 1024: 512, transmission efficiency: 1.0000},
{MCS index: b3, modulation scheme: QPSK, coding rate x 1024: 640, transmission efficiency: 1.2500},
{MCS index: b4, modulation scheme: QPSK, coding rate x 1024: 768, transmission efficiency: 1.5000}, and
{MCS index: b5, modulation scheme: QPSK, coding rate x 1024: 896, transmission efficiency: 1.7500}.

47. The apparatus according to any one of claims 27 to 43, wherein the predefined information set comprises at least six information subsets as follows:

{MCS index: b0, modulation scheme: QPSK, transmission efficiency: 0.7500, coding rate: 3/8},
{MCS index: b1, modulation scheme: QPSK, transmission efficiency: 1.0000, coding rate: 1/2},
{MCS index: b2, modulation scheme: QPSK, transmission efficiency: 1.2500, coding rate: 5/8},

{MCS index: b3, modulation scheme: QPSK, transmission efficiency: 1.5000, coding rate: 3/4},
{MCS index: b4, modulation scheme: QPSK, transmission efficiency: 1.7500, coding rate: 7/8}, and
{MCS index: b5, modulation scheme: QPSK, transmission efficiency: 2.0000, coding rate: 1}; or
the predefined information set comprises at least six information subsets as follows:

{MCS index: b0, modulation scheme: QPSK, coding rate x 1024: 384, transmission efficiency: 0.7500},
{MCS index: b1, modulation scheme: QPSK, coding rate x 1024: 512, transmission efficiency: 1.0000},
{MCS index: b2, modulation scheme: QPSK, coding rate x 1024: 640, transmission efficiency: 1.2500},
{MCS index: b3, modulation scheme: QPSK, coding rate x 1024: 768, transmission efficiency: 1.5000},
{MCS index: b4, modulation scheme: QPSK, coding rate x 1024: 896, transmission efficiency: 1.7500}, and
{MCS index: b5, modulation scheme: QPSK, coding rate x 1024: 1024, transmission efficiency: 2.0000}.

48. The apparatus according to any one of claims 27 to 43, wherein the predefined information set comprises at least seven information subsets as follows:

{MCS index: b0, modulation scheme: QPSK, transmission efficiency: 0.5000, coding rate: 1/4},
{MCS index: b1, modulation scheme: QPSK, transmission efficiency: 0.7500, coding rate: 3/8},
{MCS index: b2, modulation scheme: QPSK, transmission efficiency: 1.0000, coding rate: 1/2},
{MCS index: b3, modulation scheme: QPSK, transmission efficiency: 1.2500, coding rate: 5/8},
{MCS index: b4, modulation scheme: QPSK, transmission efficiency: 1.5000, coding rate: 3/4},
{MCS index: b5, modulation scheme: QPSK, transmission efficiency: 1.7500, coding rate: 7/8}, and
{MCS index: b6, modulation scheme: QPSK, transmission efficiency: 2.0000, coding rate: 1}; or
the predefined information set comprises at least seven information subsets as follows:

{MCS index: b0, modulation scheme: QPSK, coding rate x 1024: 256, transmission efficiency: 0.5000},
{MCS index: b1, modulation scheme: QPSK, coding rate x 1024: 384, transmission efficiency: 0.7500},
{MCS index: b2, modulation scheme: QPSK, coding rate x 1024: 512, transmission efficiency: 1.0000},
{MCS index: b3, modulation scheme: QPSK, coding rate x 1024: 640, transmission efficiency: 1.2500},
{MCS index: b4, modulation scheme: QPSK, coding rate x 1024: 768, transmission efficiency: 1.5000},
{MCS index: b5, modulation scheme: QPSK, coding rate x 1024: 896, transmission efficiency: 1.7500}, and
{MCS index: b6, modulation scheme: QPSK, coding rate x 1024: 1024, transmission efficiency: 2.0000}.

49. The apparatus according to any one of claims 27 to 43, wherein the predefined information set comprises at least five information subsets as follows:

{MCS index: b0, modulation scheme: QPSK, transmission efficiency: 1.0000, coding rate: 1/2},
{MCS index: b1, modulation scheme: QPSK, transmission efficiency: 1.2500, coding rate: 5/8},
{MCS index: b2, modulation scheme: QPSK, transmission efficiency: 1.5000, coding rate: 3/4},
{MCS index: b3, modulation scheme: QPSK, transmission efficiency: 1.7500, coding rate: 7/8}, and
{MCS index: b4, modulation scheme: QPSK, transmission efficiency: 2.0000, coding rate: 1}; or
the predefined information set comprises at least five information subsets as follows:

{MCS index: b0, modulation scheme: QPSK, coding rate x 1024: 512, transmission efficiency: 1.0000},
{MCS index: b1, modulation scheme: QPSK, coding rate x 1024: 640, transmission efficiency: 1.2500},
{MCS index: b2, modulation scheme: QPSK, coding rate x 1024: 768, transmission efficiency: 1.5000},
{MCS index: b3, modulation scheme: QPSK, coding rate x 1024: 896, transmission efficiency: 1.7500}, and
{MCS index: b4, modulation scheme: QPSK, coding rate x 1024: 1024, transmission efficiency: 2.0000}.

50. The apparatus according to any one of claims 27 to 43, wherein the predefined information set comprises at least seven information subsets as follows:

{MCS index: b0, modulation scheme: QPSK, transmission efficiency: 0.5000, coding rate: 1/4},
{MCS index: b1, modulation scheme: QPSK, transmission efficiency: 0.6667, coding rate: 1/3},
{MCS index: b2, modulation scheme: QPSK, transmission efficiency: 1.0000, coding rate: 1/2},
{MCS index: b3, modulation scheme: QPSK, transmission efficiency: 1.3333, coding rate: 2/3},
{MCS index: b4, modulation scheme: QPSK, transmission efficiency: 1.5000, coding rate: 3/4},
{MCS index: b5, modulation scheme: QPSK, transmission efficiency: 1.6667, coding rate: 5/6}, and
{MCS index: b6, modulation scheme: QPSK, transmission efficiency: 2.0000, coding rate: 1}; or

the predefined information set comprises at least seven information subsets as follows:

{MCS index: b0, modulation scheme: QPSK, coding rate x 1024: 256, transmission efficiency: 0.5000},
{MCS index: b1, modulation scheme: QPSK, coding rate x 1024: 341, transmission efficiency: 0.6667},
{MCS index: b2, modulation scheme: QPSK, coding rate x 1024: 512, transmission efficiency: 1.0000},
{MCS index: b3, modulation scheme: QPSK, coding rate x 1024: 683, transmission efficiency: 1.3333},
{MCS index: b4, modulation scheme: QPSK, coding rate x 1024: 768, transmission efficiency: 1.5000},
{MCS index: b5, modulation scheme: QPSK, coding rate x 1024: 853, transmission efficiency: 1.6667}, and
{MCS index: b6, modulation scheme: QPSK, coding rate x 1024: 1024, transmission efficiency: 2.0000}.

51. The apparatus according to any one of claims 27 to 50, wherein the predefined information set comprises at least four information subsets as follows:

{MCS index: c0, modulation scheme: 8PSK, transmission efficiency: 1.8750, coding rate: 5/8},
{MCS index: c1, modulation scheme: 8PSK, transmission efficiency: 2.2500, coding rate: 3/4},
{MCS index: c2, modulation scheme: 8PSK, transmission efficiency: 2.6250, coding rate: 7/8}, and
{MCS index: c3, modulation scheme: 8PSK, transmission efficiency: 3.0000, coding rate: 1}; or
the predefined information set comprises at least four information subsets as follows:

{MCS index: c0, modulation mode: 8PSK, coding rate x 1024: 640, transmission efficiency: 1.8750},
{MCS index: c1, modulation mode: 8PSK, coding rate x 1024: 768, transmission efficiency: 2.2500},
{MCS index: c2, modulation mode: 8PSK, coding rate x 1024: 896, transmission efficiency: 2.6250}, and
{MCS index: c3, modulation mode: 8PSK, coding rate x 1024: 1024, transmission efficiency: 3.0000}.

52. The apparatus according to any one of claims 27 to 50, wherein the predefined information set comprises at least four information subsets as follows:

{MCS index: c0, modulation scheme: 8PSK, transmission efficiency: 2.0000, coding rate: 2/3},
{MCS index: c1, modulation scheme: 8PSK, transmission efficiency: 2.2500, coding rate: 3/4},
{MCS index: c2, modulation scheme: 8PSK, transmission efficiency: 2.5000, coding rate: 5/6}, and
{MCS index: c3, modulation scheme: 8PSK, transmission efficiency: 3.0000, coding rate: 1}; or
the predefined information set comprises at least four information subsets as follows:

{MCS index: c0, modulation mode: 8PSK, coding rate x 1024: 683, transmission efficiency: 2.0000},
{MCS index: c1, modulation mode: 8PSK, coding rate x 1024: 768, transmission efficiency: 2.2500},
{MCS index: c2, modulation mode: 8PSK, coding rate x 1024: 853, transmission efficiency: 2.5000}, and
{MCS index: c3, modulation mode: 8PSK, coding rate x 1024: 1024, transmission efficiency: 3.0000}.

53. A chip system, wherein the chip system comprises at least one processor and a communication interface, and the at least one processor is configured to invoke a computer program stored in at least one memory, so that an apparatus in which the chip system is located implements the method according to any one of claims 1, 2, and 7 to 26.

54. A chip system, wherein the chip system comprises at least one processor and a communication interface, and the at least one processor is configured to invoke a computer program stored in at least one memory, so that an apparatus in which the chip system is located implements the method according to any one of claims 3 to 26.

55. A computer-readable storage medium, wherein the computer-readable storage medium stores a computer program, and when the computer program is run on one or more processors, the method according to any one of claims 1, 2, and 7 to 26 is performed.

56. A computer-readable storage medium, wherein the computer-readable storage medium stores a computer program, and when the computer program is run on one or more processors, the method according to any one of claims 3 to 26 is performed.

57. A data transmission system, comprising:

a first node, wherein the first node comprises the data transmission apparatus according to any one of claims 27, 28, and 33 to 52; and

a second node, wherein the second node comprises the data transmission apparatus according to any one of claims 29 to 52.

FIG. 1

FIG. 2

Coding scheme: polar code
Code length: 128 bits
Block error rate: 0.1

Relationship between transmission efficiency and an SNR

FIG. 3

First node

Second node

Report indication information

S401: Determine a first MCS index

S402: Send the first MCS index to the first node

S403: Determine a first modulation and coding scheme based on the first MCS index and an MCS information set

S404: Receive data from the second node or send data to the second node based on the first modulation and coding scheme

S405: Send data to the first node or receive data from the first node based on the first modulation and coding scheme corresponding to the first MCS index

FIG. 4

**Data transmission direction**

First node (data receiver)

Indication information

Second node (data sender)

MCS index

FIG. 5

Data transmission direction

| First node (data receiver) | ← MCS index | Second node (data sender) |

## FIG. 6

Information transmission direction

| First node (terminal node) | ← MCS index | Second node (management node) |

(a) Uplink status: The first node sends data to the second node.
The second node determines indication information, and determines an
MCS index based on the indication information

Information transmission direction

| First node (terminal node) | Report indication information → ← MCS index | Second node (management node) |

(b) Downlink status: The first node sends data to the second node.
The first node reports indication information, and an MCS index is
determined based on the indication information

## FIG. 7

FIG. 8

FIG. 9

## INTERNATIONAL SEARCH REPORT

International application No.

**PCT/CN2021/101032**

### A. CLASSIFICATION OF SUBJECT MATTER

H04L 1/00(2006.01)i; H04L 27/34(2006.01)i

According to International Patent Classification (IPC) or to both national classification and IPC

### B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 调制, 编码, 方案, 方式, MCS, 索引, 速率, 车联网, BPSK, QPSK, 8PSK, modulate, modulation, coding, scheme, index, rate, vehicle

### C. DOCUMENTS CONSIDERED TO BE RELEVANT

| Category* | Citation of document, with indication, where appropriate, of the relevant passages | Relevant to claim No. |
|---|---|---|
| X | CN 109152052 A (HUAWEI TECHNOLOGIES CO., LTD.) 04 January 2019 (2019-01-04) description, paragraphs [0111]-[0300] and [0402]-[0411], and figure 2 | 1-57 |
| A | CN 105794167 A (INTEL IP CORP.) 20 July 2016 (2016-07-20) entire document | 1-57 |
| A | CN 111357372 A (ZTE CORP.) 30 June 2020 (2020-06-30) entire document | 1-57 |
| A | WO 2017171956 A1 (INTEL IP CORP.) 05 October 2017 (2017-10-05) entire document | 1-57 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 January 2022** | **11 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/101032**

| Patent document cited in search report | | | Publication date (day/month/year) | Patent family member(s) | | | Publication date (day/month/year) |
|---|---|---|---|---|---|---|---|
| CN | 109152052 | A | 04 January 2019 | US | 2019068313 | A1 | 28 February 2019 |
| | | | | US | 10447425 | B2 | 15 October 2019 |
| | | | | JP | 2020523830 | A | 06 August 2020 |
| | | | | JP | 6891979 | B2 | 18 June 2021 |
| | | | | CN | 110999464 | A | 10 April 2020 |
| | | | | RU | 2737614 | C1 | 01 December 2020 |
| | | | | US | 2020092033 | A1 | 19 March 2020 |
| | | | | EP | 3468277 | A1 | 10 April 2019 |
| | | | | EP | 3468277 | A4 | 31 July 2019 |
| | | | | EP | 3468277 | B1 | 01 July 2020 |
| | | | | CN | 109150403 | A | 04 January 2019 |
| | | | | ES | 2814624 | T3 | 29 March 2021 |
| | | | | KR | 20200011968 | A | 04 February 2020 |
| | | | | KR | 102276760 | B1 | 15 July 2021 |
| | | | | BR | 112019026455 | A2 | 14 July 2020 |
| | | | | AU | 2018284901 | A1 | 02 January 2020 |
| | | | | AU | 2018284901 | B2 | 27 May 2021 |
| | | | | EP | 3780441 | A1 | 17 February 2021 |
| CN | 105794167 | A | 20 July 2016 | TW | 201808047 | A | 01 March 2018 |
| | | | | TW | I664871 | B | 01 July 2019 |
| | | | | RU | 2684411 | C1 | 09 April 2019 |
| | | | | CA | 2931664 | A1 | 09 July 2015 |
| | | | | CA | 2931664 | C | 18 August 2020 |
| | | | | TW | 201543932 | A | 16 November 2015 |
| | | | | TW | I556671 | B | 01 November 2016 |
| | | | | RU | 2649321 | C1 | 02 April 2018 |
| | | | | US | 2019364545 | A1 | 28 November 2019 |
| | | | | US | 11122551 | B2 | 14 September 2021 |
| | | | | JP | 2017509173 | A | 30 March 2017 |
| | | | | JP | 6578564 | B2 | 25 September 2019 |
| | | | | BR | 112016012916 | A8 | 22 January 2019 |
| | | | | US | 2015195819 | A1 | 09 July 2015 |
| | | | | RU | 2637495 | C1 | 05 December 2017 |
| | | | | WO | 2015103630 | A1 | 09 July 2015 |
| | | | | TW | 201705795 | A | 01 February 2017 |
| | | | | TW | I610588 | B | 01 January 2018 |
| | | | | EP | 3092762 | A1 | 16 November 2016 |
| | | | | EP | 3092762 | A4 | 06 September 2017 |
| | | | | EP | 3092762 | B1 | 17 June 2020 |
| | | | | KR | 20160083924 | A | 12 July 2016 |
| | | | | KR | 101896164 | B1 | 07 September 2018 |
| CN | 111357372 | A | 30 June 2020 | US | 2020259508 | A1 | 13 August 2020 |
| | | | | EP | 3711419 | A1 | 23 September 2020 |
| | | | | EP | 3711419 | A4 | 02 June 2021 |
| | | | | WO | 2019095336 | A1 | 23 May 2019 |
| WO | 2017171956 | A1 | 05 October 2017 | EP | 3437221 | A1 | 06 February 2019 |

Form PCT/ISA/210 (patent family annex) (January 2015)